# EUROPEAN PATENT APPLICATION

(11) **EP 4 625 944 A1**
(43) Date of publication of application: **01.10.2025**
(21) Application number: 23920793.9
(22) Date of filing: 09.11.2023
(51) Int. Cl.: H04L 67/1001

(54) **DATA REQUEST PROCESSING METHOD AND APPARATUS, AND COMPUTER DEVICE AND STORAGE MEDIUM**

(30) Priority: 07.02.2023 CN 202310150980
(71) Applicant: Tencent Technology (Shenzhen) Company Limited, Shenzhen, Guangdong 518057 (CN)
(72) Inventor: WANG, Fuyu, Shenzhen, Guangdong 518057 (CN); LUO, Mingming, Shenzhen, Guangdong 518057 (CN); OUYANG, Changkui, Shenzhen, Guangdong 518057 (CN); WANG, Zhiqiang, Shenzhen, Guangdong 518057 (CN); LUO, Cheng, Shenzhen, Guangdong 518057 (CN); GUO, Lingfeng, Shenzhen, Guangdong 518057 (CN)
(74) Representative: EP&C
(86) International application number: PCT/CN2023/130699
(87) International publication number: WO 2024/164601

(57) **Abstract**

This application relates to a method and apparatus of processing a data request, a computer device, a storage medium, and a computer program product. The method may be applied to technical fields such as cloud technologies and content delivery. The method includes: receiving, through a first communication link, a data request transmitted by a client (operation S202); obtaining an address of a back-end server based on the data request, and creating a second communication link based on the address, the second communication link being a communication connection between the front-end server and the back-end server (operation S204); and transmitting the data request to the back-end server via the second communication link, to instruct the back-end server to create an analog communication connection between the back-end server and the client, and transmit a data packet used for responding to the data request to the client using the analog communication connection (operation S206).

## Description

### RELATED APPLICATION

This application claims priority to Chinese Patent Application No. 202310150980.2, filed with the China National Intellectual Property Administration on February 7, 2023 and entitled "DATA REQUEST PROCESSING METHOD AND APPARATUS, COMPUTER DEVICE, AND STORAGE MEDIUM", which is incorporated herein by reference in its entirety.

### FIELD OF THE TECHNOLOGY

This application relates to the field of computer network technologies, and in particular, to a data request processing method and apparatus, a computer device, a storage medium, and a computer program product.

### BACKGROUND OF THE DISCLOSURE

With development of the Internet, users have increasingly higher requirements on transmission performance of the Internet. In the related art, a client initiates a request to a front-end server, the front-end server determines, based on load balancing, a back-end server for responding to the request, the back-end server transmits response data to the front-end server, and then the front-end server transmits the response data to the client. For the back-end server determined based on load balancing, the following problem easily occurs: the back-end server does not have the response data corresponding to the request, and therefore needs to obtain the response data from a source, resulting in a high bandwidth requirement, a long delay, and poor transmission performance.

### SUMMARY

According to embodiments provided in this application, a method and apparatus of processing a data request, a computer device, a computer-readable storage medium, and a computer program product are provided.

According to a first aspect, this application provides a method of processing a data request, performed by a front-end server, the method including:
receiving, through a first communication link, a data request transmitted by a client; the first communication link being a communication connection between the front-end server and the client; a back-end server storing therein data for responding to the data request; obtaining an address of the back-end server based on the data request, and creating a second communication link based on the address, the second communication link being a communication connection between the front-end server and the back-end server; and transmitting the data request to the back-end server via the second communication link, to instruct the back-end server to create an analog communication connection between the back-end server and the client, and transmit a data packet used for responding to the data request to the client using the analog communication connection.

According to a second aspect, this application provides a method of processing a data request, performed by a back-end server, the method including:
receiving, based on a second communication link, a data request transmitted by a front-end server, the data request being a request transmitted by a client to the front-end server based on a first communication link; in response to the data request, creating an analog communication connection between the back-end server and the client, and obtaining target data used for responding to the data request; and transmitting, to the client through the analog communication connection, a data packet in which the target data is encapsulated.

According to a third aspect, this application further provides an apparatus of processing a data request, including:
a data request receiving module, configured for receiving, through a first communication link, a data request transmitted by a client; the first communication link being a communication connection between the front-end server and the client; a back-end server storing therein data for responding to the data request; a back-end server scheduling module, configured for obtaining an address of the back-end server based on the data request, and creating a second communication link based on the address, the second communication link being a communication connection between the front-end server and the back-end server; and a first data request transmission module, configured for transmitting the data request to the back-end server via the second communication link, to instruct the back-end server to create an analog communication connection between the back-end server and the client, and transmit a data packet used for responding to the data request to the client using the analog communication connection.

According to a fourth aspect, this application further provides an apparatus of processing a data request, including:
a second data request transmission module, configured for receiving, based on a second communication link, a data request transmitted by a front-end server, the data request being a request transmitted by a client to the front-end server based on a first communication link; a target data obtaining module, configured for: in response to the data request, creating an analog communication connection between the back-end server the client, and obtaining target data used for responding to the data request; and a data packet transmission module, configured for transmitting, to the client using the analog communication connection, a data packet in which the target data is encapsulated.

According to a fifth aspect, this application further provides a computer device. The computer device includes a memory and a processor. The memory has a computer-readable instruction stored therein, and the processor, when executing the computer-readable instruction, implements the following operations:
receiving, through a first communication link, a data request transmitted by a client, the first communication link being a communication connection between the front-end server and the client; a back-end server storing therein data for responding to the data request; obtaining an address of the back-end server based on the data request, and creating a second communication link based on the address, the second communication link being a communication connection between the front-end server and the back-end server; and transmitting the data request to the back-end server via the second communication link, to instruct the back-end server to create an analog communication connection between the back-end server and the client, and transmit a data packet used for responding to the data request to the client using the analog communication connection.

According to a sixth aspect, this application further provides a computer device. The computer device includes a memory and a processor. The memory has a computer-readable instruction stored therein, and the processor, when executing the computer-readable instruction, implements the following operations:
receiving, based on a second communication link, a data request transmitted by a front-end server, the data request being a request transmitted by a client to the front-end server based on a first communication link; in response to the data request, creating an analog communication connection between the back-end server and the client, and obtaining target data used for responding to the data request; and transmitting, to the client through the analog communication connection, a data packet in which the target data is encapsulated.

According to a seventh aspect, this application further provides a computer-readable storage medium. The computer-readable storage medium has a computer-readable instruction stored therein, and the computer-readable instruction, when executed by a processor, implements the following operations:
receiving, through a first communication link, a data request transmitted by a client, the first communication link being a communication connection between the front-end server and the client; a back-end server storing therein data for responding to the data request; obtaining an address of the back-end server based on the data request, and creating a second communication link based on the address, the second communication link being a communication connection between the front-end server and the back-end server; and transmitting the data request to the back-end server via the second communication link, to instruct the back-end server to create an analog communication connection between the back-end server and the client, and transmit a data packet used for responding to the data request to the client using the analog communication connection.

According to an eighth aspect, this application further provides a computer-readable storage medium. The computer-readable storage medium has a computer-readable instruction stored therein, and the computer-readable instruction, when executed by a processor, implements the following operations:
receiving, based on a second communication link, a data request transmitted by a front-end server, the data request being a request transmitted by a client to the front-end server based on a first communication link; in response to the data request, creating an analog communication connection between the back-end server and the client, and obtaining target data used for responding to the data request; and transmitting, to the client through the analog communication connection, a data packet in which the target data is encapsulated.

According to a ninth aspect, this application further provides a computer-readable instruction product. The computer-readable instruction product includes a computer-readable instruction, and the computer-readable instruction, when executed by a processor, implements the following operations:
receiving, through a first communication link, a data request transmitted by a client, the first communication link being a communication connection between the front-end server and the client; a back-end server storing therein data for responding to the data request; obtaining an address of the back-end server based on the data request, and creating a second communication link based on the address, the second communication link being a communication connection between the front-end server and the back-end server; and transmitting the data request to the back-end server via the second communication link, to instruct the back-end server to create an analog communication connection between the back-end server and the client, and transmit a data packet used for responding to the data request to the client using the analog communication connection.

According to a tenth aspect, this application further provides a computer-readable instruction product. The computer-readable instruction product includes a computer-readable instruction, and the computer-readable instruction, when executed by a processor, implements the following operations:
receiving, based on a second communication link, a data request transmitted by a front-end server, the data request being a request transmitted by a client to the front-end server based on a first communication link; in response to the data request, creating an analog communication connection between the back-end server and the client, and obtaining target data used for responding to the data request; and transmitting, to the client through the analog communication connection, a data packet in which the target data is encapsulated.

Details of one or more embodiments of this application are provided in the following accompanying drawings and descriptions. Other features, objectives, and advantages of this application become clear from the specification, accompanying drawings, and claims.

### BRIEF DESCRIPTION OF THE DRAWINGS

To describe technical solutions in embodiments of this application more clearly, the following briefly describes accompanying drawings required for describing the embodiments. Clearly, the accompanying drawings described below show merely example embodiments of this application, and a person of ordinary skill in the art may further derive other drawings from these accompanying drawings without creative efforts.
FIG. 1 is a diagram of an application environment of a data request processing method according to an embodiment.
FIG. 2 is a schematic flowchart of a data request processing method according to an embodiment.
FIG. 3 is a diagram of a loop duration corresponding to delayed acknowledgment according to an embodiment.
FIG. 4 is a diagram of a front-end server delaying responding to a first acknowledgment frame according to an embodiment.
FIG. 5 is a diagram of a data request processing method according to a scenario embodiment.
FIG. 6 is a schematic flowchart of a data request processing method according to another embodiment.
FIG. 7 is a schematic flowchart of a data request processing method according to still another embodiment.
FIG. 8 is a schematic flowchart of a data request processing method according to still another embodiment.
FIG. 9 is a schematic flowchart of a back-end server transmitting a second data packet and a third data packet according to an embodiment.
FIG. 10 is a diagram of a back-end server transmitting a retransmitted data packet according to an embodiment.
FIG. 11 is a diagram of a data request processing method according to another scenario embodiment.
FIG. 12 is a schematic flowchart of a data request processing method according to still another embodiment.
FIG. 13 is a structural block diagram of a data request processing apparatus according to an embodiment.
FIG. 14 is a structural block diagram of a data request processing apparatus according to another embodiment.
FIG. 15 is a diagram of an internal structure of a computer device according to an embodiment.

### DESCRIPTION OF EMBODIMENTS

To make objectives, technical solutions, and advantages of this application clearer, the following further describes this application in detail with reference to accompanying drawings and embodiments. Specific embodiments described herein are merely used for explaining this application, rather than limiting this application.

In the specification and accompanying drawings, operations and elements that are basically the same or similar are represented by the same or similar reference signs, and repeated descriptions of these operations and elements are omitted. In addition, in descriptions of this application, terms such as "first" and "second" are merely used for a distinguishing purpose, and cannot be understood as indicating or implying relative importance or a sequence.

A cloud technology is a hosting technology of aggregating a series of hardware, software, network, and other resources in a wide area network or a local area network to implement data computing, storage, processing, and sharing.

The cloud technology is a general term for a network technology, an information technology, an integration technology, a management platform technology, an application technology, and the like that are applied based on a cloud computing business mode, and a resource pool may be formed and used as required, which is flexible and convenient. A cloud computing technology is an important support. A background service of a technology network system requires many computing and storage resources, such as video websites, picture websites, and more portal websites. Accompanied with high-level development and application of the Internet industry, each item may have its own identifier in the future. All the identifiers need to be transmitted to a background system for logic processing, and data at different levels is processed separately, so that each type of industry data requires strong system support, which can be implemented only through cloud computing.

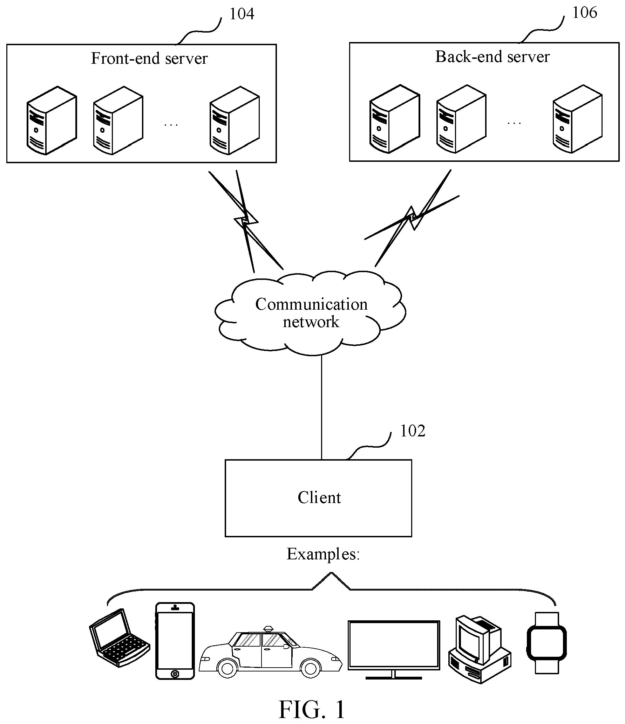

In some embodiments, a data request processing method provided in embodiments of this application may be applied to an application environment shown in FIG. 1. A client 102, a front-end server 104, and a back-end server 106 communicate with each other through a network. A data storage system of the front-end server 104 may store data that needs to be processed by the front-end server 104, and may be integrated into the front-end server 104 or placed in cloud or another network server. A data storage system of the back-end server 106 may store data that needs to be processed by the back-end server 106, and may be integrated into the back-end server 106 or placed in cloud or another network server.

The front-end server 104 receives, through a first communication link to the client 102, a data request transmitted by the client 102, obtains an address of the to-be-scheduled back-end server 106 based on the data request, creates a second communication link to the back-end server 106 based on the address, and migrates the data request to the back-end server 106 based on the second communication link. In response to the data request, the back-end server 106 creates an analog communication connection to the client 102, obtains target data used for responding to the data request, and transmits, to the client 102 through the analog communication connection, a data packet in which the target data is encapsulated.

The client 102 may be a smartphone, a tablet computer, a notebook computer, a desktop computer, a smart speaker, a smart watch, an Internet of things device, and a portable wearable device. The Internet of things device may be a smart speaker, a smart television, a smart air conditioner, a smart in-vehicle device, and the like. The portable wearable device may be a smart watch, a smart band, a head-mounted device, and the like.

The front-end server 104 and the back-end server 106 may be independent physical servers, or may be serving nodes in a blockchain system. A peer-to-peer (P2P) network is formed between serving nodes in the blockchain system, and a P2P protocol is an application layer protocol running through a transmission control protocol (TCP).

Alternatively, the front-end server 104 and the back-end server 106 may be server clusters including a plurality of physical servers, or may be cloud servers that provide basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

The client 102 may be connected to the front-end server 104 and the back-end server 106 in a communication connection manner such as Bluetooth, a universal serial bus (USB), or a network. This is not limited in this application.

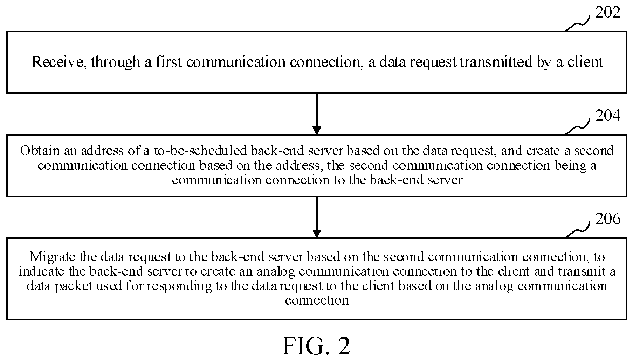

In some embodiments, as shown in FIG. 2, a data request processing method is provided. The method is performed by the client, the front-end server, or the back-end server in FIG. 1, or may be cooperatively performed by the client, the front-end server, and the back-end server in FIG. 1. An example that the method is performed by the front-end server in FIG. 1 is used for description. The method includes the following operations:

Operation 202: Receive, through a first communication link, a data request transmitted by a client. The first communication link being a communication connection between the front-end server and the client; a back-end server storing therein data for responding to the data request. In embodiments of the present application, operation 202 may include following steps: receive, through a first communication connection, a data request transmitted by a client.

The communication connection may be a quick user datagram protocol (UDP) Internet connection (QUIC) communication connection, which is a communication connection created based on a QUIC protocol. The QUIC protocol is a UDP-based low-latency Internet transport layer protocol. The first communication link is a communication connection between the front-end server and the client, and is used for implementing data transmission between the front-end server and the client.

The data request may be a request used for obtaining data. In different application scenarios, the client needs to obtain different data. For example, in a web page loading scenario, the data request is used for obtaining data for loading a web page. In a video playing scenario, the data request is used for obtaining to-be-played video data. There may be a plurality of data requests, that is, the front-end server receives, through the first communication link, a plurality of data requests concurrently transmitted by the client.

In some embodiments, when the client communicates with the front-end server for the first time, the client initiates a connection creation message to the front-end server, and the front-end server transmits key configuration information to the client in response to the connection creation message, so that a QUIC communication connection is created between the client and the front-end server through this message exchange. The client transmits a data request and a key to the front-end server through the QUIC communication connection to the front-end server. The front-end server receives, through the QUIC communication connection to the client, the data request and the key that are transmitted by the client.

The front-end server may determine a session key based on the key and the key configuration information, to facilitate subsequent communication between the client and the front-end server based on the session key. When the client communicates with the front-end server for the first time, the client can transmit a data request to the front-end server through one message exchange. Therefore, time costs for transmitting the data request is 1 round-trip time (RTT).

When the client communicates with the front-end server for a non-first time, the client stores the key configuration information obtained during the first time of communication. During the non-first time of communication, the client can directly transmit a data request and the key configuration information to the front-end server. In other words, during the non-first time of communication, the client can directly transmit the data request to the front-end server. Therefore, time costs for transmitting the data request is 0 RTT.

In the related art, establishment of most communication connections needs at least 2 RTTs, resulting in a long delay. In contrast, the QUIC communication connection can be established by using 0 RTT during the non-first time of communication, which reduces a delay, and reduces traffic consumption of the front-end server and the client in a handshake phase.

Operation 204: Obtain an address of the back-end server based on the data request, and create a second communication link based on the address, the second communication link being a communication connection between the front-end server and the back-end server. In embodiments of the present application, operation 204 may include following steps: obtain an address of a to-be-scheduled back-end server based on the data request, and create a second communication connection based on the address, the second communication connection being a communication connection to the back-end server.

The back-end server is a server providing a service for the client, and stores data for responding to the data request.

The second communication link is a QUIC communication connection between the front-end server and the back-end server, and is used for implementing data transmission between the front-end server and the back-end server.

In some embodiments, the front-end server forwards the received data request to a scheduling center. The scheduling center obtains, based on the data request, an address of a back-end server for responding to the data request. The front-end server obtains the address of the back-end server transmitted by the scheduling center, to determine the to-be-scheduled back-end server. The front-end server creates a second communication link to the back-end server corresponding to the address of the back-end server.

After the second communication link between the front-end server and the back-end server is created, the second communication link may be associated with a stream identifier corresponding to the data request, to subsequently determine the second communication link based on the stream identifier corresponding to the data request, and transmit data related to the data request between the front-end server and the back-end server through the second communication link.

In some embodiments, the front-end server may forward the data request to the scheduling center by using the QUIC protocol, or may forward the data request to the scheduling center by using a hypertext transfer protocol (HTTP)/2 protocol and an HTTP/3 protocol. The HTTP/2 protocol is the second version of the HTTP, and the HTTP/3 protocol is the third version of the HTTP. The scheduling center and the front-end server may or may not be located in the same physical device.

In some embodiments, when the client concurrently transmits a plurality of data requests to the front-end server, the front-end server forwards the plurality of data requests to the scheduling center, to obtain addresses of a plurality of back-end servers configured for responding to the plurality of data requests. The front-end server respectively creates second communication links to the plurality of back-end servers based on the addresses of the plurality of back-end servers, to implement request-level scheduling. When the same back-end server has data used for responding to at least two data requests, the back-end server processes the at least two data requests through the same second communication link.

In this embodiment of this application, an address of a back-end server that is actually to respond to a data request is determined by using the scheduling center to perform request-level scheduling, rather than determined through load balancing. The back-end server in this embodiment of this application has data for responding to the data request, which does not need to be obtained from a source, thereby reducing a delay and communication overheads between servers. Fine request-level scheduling can be performed without changing existing logic of the client, thereby improving a disaster tolerance capability.

Operation 206: transmit the data request to the back-end server via the second communication link, to instruct the back-end server to create an analog communication connection between the back-end server and the client, and transmit a data packet used for responding to the data request to the client using the analog communication connection. In embodiments of the present application, operation 206 include following steps: migrate the data request to the back-end server based on the second communication connection, to indicate the back-end server to create an analog communication connection to the client and transmit a data packet used for responding to the data request to the client based on the analog communication connection.

The analog communication connection may be a communication connection between the back-end server and the client. The back-end server is used as a proxy server of the front-end server, so that the analog communication connection between the back-end server and the client may be obtained by simulating the first communication link between the front-end server and the client. The back-end server performs data transmission with the client through the analog communication connection, and is configured for simulating the front-end server to directly perform data transmission with the client.

The data packet is obtained by encapsulating target data for responding to the data request, there are a plurality of data packets, and the back-end server transmits the plurality of data packets to the client.

In some embodiments, the front-end server transmits, to the back-end server through the second communication link by using the HTTP/3 protocol, the data request carrying initial signaling, to migrate the data request. The back-end server restores a context based on the data request and the initial signaling, and creates an analog communication connection to the client, so that the back-end server simulates a front-end server directly communicating with the client. The back-end server obtains target data used for responding to the data request, and transmits, to the client based on the analog communication connection, a data packet obtained by encapsulating the target data.

The back-end server directly transmits the data packet to the client, that is, the data packet is transmitted in a direct server return (DSR) mode, instead of the back-end server transmitting the data packet to the front-end server and then the front-end server transmitting the data packet to the client, which reduces bandwidth consumption between the back-end server and the front-end server, reduces downlink traffic pressure of the front-end server, increases an uplink throughput of the front-end server, reduces a delay, and improves transmission performance.

The initial signaling includes initial information used for creating the analog communication connection. The initial signaling includes, but is not limited to, a connection identifier (CID), a stream identifier, and a four-tuple. The CID is an identifier of the first communication link. The stream identifier is an identifier of a data stream corresponding to the data request. The four-tuple includes: an Internet protocol (IP) address and a port of the client, and an IP address and a port of the front-end server.

If the data request and the initial signaling are transmitted separately, when head-of-line blocking occurs, after receiving the data request, the back-end server further needs to wait for the initial signaling, resulting in a long delay. When the data request carrying the initial signaling is forwarded to the back-end server, the back-end server can receive the data request and the initial signaling at the same time, which reduces a delay.

During actual application, the front-end server forwards, to the back-end server by extending an HTTP/3 header field, the data request carrying the initial signaling. The HTTP/3 header field may be extended into a plurality of lines, and the initial signaling and the data request are added to the extended header field, and transmitted together to the back-end server.

Alternatively, another protocol may be used to transmit, to the back-end server through the second communication link, the data request carrying the initial signaling, to migrate the data request. For example, the HTTP/2 protocol may be used.

In some embodiments, when the client concurrently transmits a plurality of data requests, the front-end server establishes second communication links to a plurality of back-end servers for responding to the plurality of data requests, the plurality of back-end servers respectively receive, through the plurality of second communication links, the plurality of data requests migrated by the front-end server, to create analog communication connections to the client, and the back-end servers transmit, to the client through the analog communication connections, data packets used for responding to the data requests. The plurality of back-end servers configured for responding to the plurality of data requests directly transmit the corresponding data packets to the client, so that downlink traffic is distributed to different paths, which reduces congestion of a single path, and improves transmission efficiency.

In some embodiments, the front-end server is configured with an outer center (OC), and the back-end server is configured with an edge/fog computing node (FOG). Compared with the OC, the FOG is closer to the client. Therefore, when the back-end server directly transmits the data packet to the client, a delay can be reduced, and transmission efficiency can be improved.

In the foregoing embodiment, the front-end server receives, through the first communication link to the client, the data request transmitted by the client, and obtains the address of the to-be-scheduled back-end server based on the data request, to establish the second communication link to the back-end server. The front-end server migrates the data request to the back-end server through the second communication link, so that the back-end server creates the analog communication connection to the client. The back-end server directly transmits the data packet used for responding to the data request to the client based on the analog communication connection. The front-end server performs request-level scheduling, and determines that the to-be-scheduled back-end server has the data for responding to the data request, so that the back-end server can directly respond to the data request without obtaining, from a source, the data for responding to the data request, which reduces a delay and communication overheads between servers. The back-end server directly transmits the data packet to the client through the analog communication connection, instead of the back-end server transmitting the data packet to the front-end server and then the front-end server transmitting the data packet to the client, which reduces bandwidth consumption between the back-end server and the front-end server, reduces downlink traffic pressure of the front-end server, increases an uplink throughput of the front-end server, reduces a delay, and improves transmission performance.

In some embodiments, the data request processing method further includes: when the transmission of the data request is completed, receiving, based on a first unidirectional data channel of the second communication link, a transmission complete instruction transmitted by the back-end server, the first unidirectional data channel being initiated by the back-end server; and updating a transmission module of the data request to a migrated state based on the transmission complete instruction.

The unidirectional data channel is a channel in which data is transmitted in a single direction. In this embodiment of this application, the first unidirectional data channel is a unidirectional data channel in the QUIC protocol standard version specification RFC9000. The first unidirectional data channel is a channel through which the back-end server transmits data to the front-end server.

In some embodiments, when the data request is migrated to the back-end server, the back-end server creates a first unidirectional data channel of the second communication link, and transmits a transmission complete instruction to the front-end server based on the first unidirectional data channel of the second communication link. The transmission complete instruction includes the stream identifier corresponding to the data request. The front-end server receives the transmission complete instruction based on the first unidirectional data channel, and updates a transmission module of the corresponding data request to a migrated state based on the stream identifier included in the transmission complete instruction.

During actual application, the back-end server uses stream data corresponding to the transmission complete instruction as an ordered byte stream, encapsulates the ordered byte stream into a data frame, and transmits the data frame through the first unidirectional data channel. The front-end server sequentially buffers, by using the data frame, the stream data corresponding to the transmission complete instruction, to receive the transmission complete instruction based on the first unidirectional data channel.

In some embodiments, before the front-end server receives the transmission complete instruction corresponding to the data request, the transmission module of the data request is an unmigrated state. When a duration elapsing since the front-end server transmits the data request to the back-end server reaches a preset timeout duration, and no transmission complete instruction is received, the front-end server may retransmit the data request to the back-end server, or the front-end server provides a service of responding to the data request to the client.

In the foregoing embodiment, the front-end server receives, based on the first unidirectional data channel, the transmission complete instruction transmitted by the back-end server, so that the back-end server can actively transmit data to the front-end server without waiting for the front-end server to create a data channel, which improves timeliness of updating the transmission module. In addition, compared with a bidirectional data channel, the unidirectional data channel needs fewer channel resources, so that resources consumed for data transmission are reduced.

In some embodiments, the data packet includes a first data packet and a second data packet. The data request processing method further includes: receiving, based on the first communication link, a first acknowledgment frame transmitted by the client, the first acknowledgment frame being an acknowledgment frame transmitted when the client acknowledges reception of the first data packet, and a packet number of the first data packet falling within a first packet number range; and transmitting the first acknowledgment frame and a second packet number range to the back-end server based on the second communication link, to instruct the back-end server to transmit the second data packet to the client based on the analog communication connection when determining, based on the first acknowledgment frame, that no packet is lost, a packet number of the second data packet falling within the second packet number range, and a packet number in the second packet number range being greater than a packet number in the first packet number range.

There may be a plurality of first data packets. The first data packet may be obtained by encapsulating a first part of data of the target data used for responding to the data request. There may be a plurality of second data packets. The second data packet may be obtained by encapsulating a second part of data of the target data. The first packet number range includes a packet number used for encapsulation to obtain the first data packet, and the second packet number range includes a packet number used for encapsulation to obtain the second data packet. The first packet number range and the second packet number range are both transmitted by the front-end server to the back-end server.

In some embodiments, when the first data packet is a data packet transmitted by the back-end server to the client for the first time, the first packet number range may be a packet number range included in the initial signaling. In other words, when the data request is migrated to the back-end server, the initial signaling including the first packet number range is transmitted to the back-end server at the same time, so that the back-end server may transmit a packet by using a packet number in the first packet number range.

The first packet number range is associated with the stream identifier corresponding to the data request. During actual application, each packet number range allocated by the front-end server to the back-end server corresponding to the data request is associated with the stream identifier corresponding to the data request.

In some embodiments, the back-end server encapsulates a first part of data of the target data based on a packet number in the first packet number range, to obtain a first data packet, and transmits the first data packet to the client through the analog communication connection. After receiving the first data packet, the client obtains the CID based on the first data packet, obtains the first communication link based on the CID, and transmits a first acknowledgment frame to the front-end server through the obtained first communication link. The first acknowledgment frame includes the packet number of the first data packet received by the client. The client notifies, by using the first acknowledgment frame, the front-end server that the first data packet is received.

The front-end server receives, through the first communication link, the first acknowledgment frame transmitted by the client, determines the stream identifier based on the packet number included in the first acknowledgment frame, obtains the second communication link associated with the stream identifier, and transmits the first acknowledgment frame and a second packet number range to the back-end server through the second communication link. The back-end server receives, through the second communication link, the first acknowledgment frame and the second packet number range that are transmitted by the front-end server, performs packet loss detection based on the first acknowledgment frame, encapsulates, when determining that no packet is lost, a second part of data of the target data by using a packet number in the second packet number range, to obtain a second data packet, and transmits the second data packet to the client through the analog communication connection.

In some embodiments, there may be a plurality of first data packets. The back-end server performs packet loss detection based on packet numbers of a plurality of transmitted first data packets and packet numbers, included in the first acknowledgment frame, of a plurality of first data packets received by the client, and transmits the second data packet to the client through the analog communication connection when determining that the plurality of transmitted first data packets are all received by the client.

In the foregoing embodiment, the front-end server forwards the received first acknowledgment frame to the back-end server, so that the back-end server can determine, based on the first acknowledgment frame, whether a packet is lost. When no packet is lost, the back-end server continues to transmit the second data packet to the client. When forwarding the first acknowledgment frame, the front-end server allocates the second packet number range to the back-end server at the same time, so that sufficient packet numbers are available to the back-end server, thereby avoiding packet number exhaustion of the back-end server.

In some embodiments, the data packet further includes a third data packet. After the receiving, based on the first communication link, a first acknowledgment frame transmitted by the client, the method further includes: receiving, based on the first communication link, a second acknowledgment frame transmitted by the client, the second acknowledgment frame being an acknowledgment frame transmitted when the client acknowledges reception of the third data packet, a packet number of the third data packet falling within the first packet number range, and the packet number of the third data packet being greater than the packet number of the first data packet. After the transmitting the first acknowledgment frame and a second packet number range to the back-end server based on the second communication link, the method further includes: receiving, based on the first communication link, a third acknowledgment frame transmitted by the client, the third acknowledgment frame being an acknowledgment frame transmitted when the client acknowledges reception of the second data packet, and a packet number in the second packet number range being greater than a packet number in the first packet number range; and feeding back a fourth acknowledgment frame to the client based on the first communication link, to instruct the client to determine that the first acknowledgment frame is acknowledged.

There are a plurality of data packets. The second acknowledgment frame includes the packet number of the third data packet received by the client, and the third acknowledgment frame includes a packet number of each second data packet received by the client. The client transmits the acknowledgment frame in a form of a data packet, and the fourth acknowledgment frame includes the packet number corresponding to the first acknowledgment frame.

In some embodiments, the client notifies, by using a first acknowledgment frame, the front-end server that the first data packet is received, notifies, by using a second acknowledgment frame, the front-end server that the third data packet is received, and notifies, by using a third acknowledgment frame, the front-end server that the second data packet is received.

When the front-end server determines, based on the third acknowledgment frame, that the back-end server has used the second packet number range to transmit a packet, the front-end server feeds back a fourth acknowledgment frame to the client based on the first communication link. The fourth acknowledgment frame is used for feeding back to the client that the first acknowledgment frame is acknowledged by the front-end server.

The front-end server does not immediately respond to the first acknowledgment frame transmitted by the client, but responds to the first acknowledgment frame after determining, based on the third acknowledgment frame, that the back-end server has used the second packet number range to transmit a packet. This process may be referred to as delayed acknowledgment.

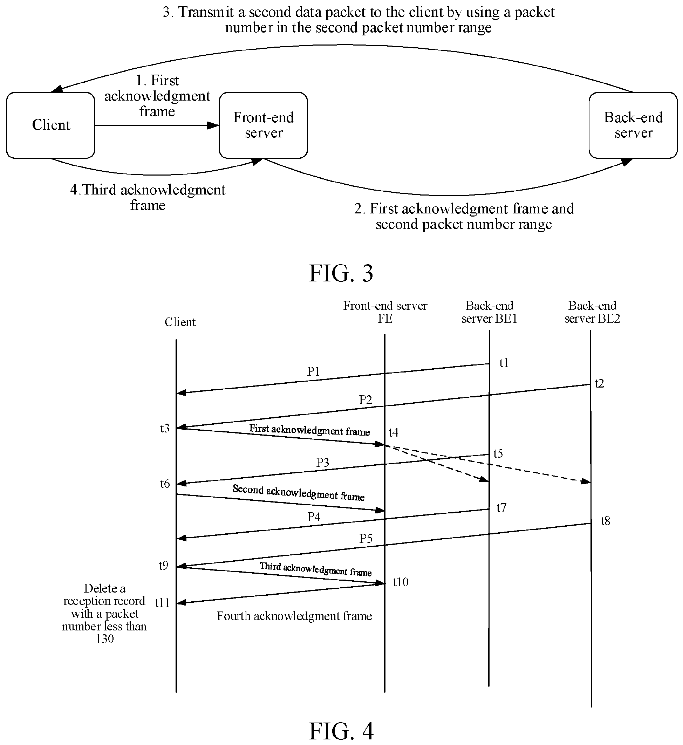

As shown in FIG. 3, the client transmits a first acknowledgment frame to the front-end server (shown by 1 in FIG. 3). The front-end server forwards the first acknowledgment frame to the back-end server and allocates a second packet number range (shown by 2 in FIG. 3). The back-end server transmits a second data packet to the client by using a packet number in the second packet number range (shown by 3 in FIG. 3). The client obtains the second data packet and transmits a third acknowledgment frame to the front-end server (shown by 4 in FIG. 3). This process forms a loop in FIG. 3. A duration of the delayed acknowledgment is a duration of the loop from the client transmitting the first acknowledgment frame to the front-end server to the client transmitting the third acknowledgment frame to the front-end server.

In some embodiments, after receiving, through the first communication link, the fourth acknowledgment frame transmitted by the front-end server, the client deletes, from reception records, a reception record with a packet number less than or equal to a maximum packet number in received first data packets. If subsequently receiving a data packet with a packet number less than or equal to the maximum packet number, the client discards the data packet.

For example, when migrating the data request, the front-end server transmits the data request and a first packet number range (100, 120] to the back-end server through the second communication link. The back-end server encapsulates the first part of data of the target data by using a packet number in the first packet number range (100, 110], to obtain a first data packet. The client obtains the first data packet, and transmits a first acknowledgment frame to the front-end server through the first communication link. After receiving a fourth acknowledgment frame fed back for the first acknowledgment frame, the client clears a record with a packet number less than or equal to a maximum packet number (110) of the first data packet, and if subsequently receiving a data packet with a packet number less than or equal to 110, the client discards the data packet with the packet number less than or equal to 110.

In some embodiments, there are a plurality of data requests, the front-end server respectively transmits first packet number ranges to back-end servers configured for responding to the plurality of data requests. Each back-end server transmits a first data packet to the client by using a packet number in a respective corresponding first packet number range, and the client receives the first data packet transmitted by each back-end server, and transmits a first acknowledgment frame to the front-end server. Each back-end server transmits a third data packet to the client by using a packet number in the respective first packet number range, and the client receives the third data packet transmitted by each back-end server, and transmits a second acknowledgment frame to the front-end server. The front-end server forwards the first acknowledgment frame and a respective corresponding second packet number range to each back-end server. The back-end server transmits a second data packet to the client by using the respective corresponding second packet number range. The client receives the second data packet transmitted by each back-end server, and transmits a third acknowledgment frame to the front-end server. The front-end server determines, based on the third acknowledgment frame, that the back-end server has used the second packet number range to transmit a packet, and feeds back a fourth acknowledgment frame to the client.

As shown in FIG. 4, an example that a client concurrently transmits two data requests is used for description. A back-end server BE1 (Back End 1) responds to a data request 1, and a back-end server BE2 responds to a data request 2. A first packet number range of the back-end server BE1 is (100, 120], and a first packet number range of the back-end server BE2 is (120, 140].

At a moment t1, the back-end server BE1 obtains a first data packet P1 through encapsulation by using a packet number falling within (100, 110] in the first packet number range (100, 120], and transmits, to the client, the first data packet P1 with the packet number falling within (100, 110]. At a moment t2, the back-end server BE2 obtains a first data packet P2 through encapsulation by using a packet number falling within (120, 130] in the first packet number range (120, 140], and transmits, to the client, the first data packet P2 with the packet number falling within (120, 130].

The client obtains P1 and P2. At a moment t3, the client transmits a first acknowledgment frame to a front-end server FE (Front End). A range of packet numbers included in the first acknowledgment frame is (100, 110] and (120, 130].

At a moment t4, the front-end server FE receives the first acknowledgment frame, transmits the first acknowledgment frame to the back-end server BE1 and the back-end server BE2, transmits a second packet number range (140, 160] to the back-end server BE1, and transmits a second packet number range (160, 180] to the back-end server BE2 (shown by dashed lines in FIG. 4).

At a moment t5, the back-end server BE1 obtains a third data packet P3 through encapsulation by using a packet number falling within (110, 120] in the first packet number range (100, 120], and transmits, to the client, the third data packet P3 with the packet number falling within (110, 120].

At a moment t6, the client receives the third data packet P3, and transmits a second acknowledgment frame to the front-end server FE. The back-end server BE1 receives the first acknowledgment frame and the second packet number range (140, 160]. The back-end server BE2 receives the first acknowledgment frame and the second packet number range (160, 180].

At a moment t7, the back-end server BE1 obtains a second data packet P4 through encapsulation by using a packet number falling within (140, 150] in the second packet number range (140, 160]. At a moment t8, the back-end server BE2 obtains a second data packet P5 through encapsulation by using a packet number falling within (160, 170] in the second packet number range (160, 180].

The client obtains P4 and P5. At a moment t9, the client transmits a third acknowledgment frame to the front-end server FE. A range of packet numbers included in the third acknowledgment frame is a union set of packet numbers of P1, P2, P3, P4, and P5.

At a moment t10, the front-end server FE receives the third acknowledgment frame, determines, based on the third acknowledgment frame, that the back-end server BE1 and the back-end server BE2 have used the second packet number ranges to transmit packets, and transmits a fourth acknowledgment frame to the client.

At a moment t11, after receiving the fourth acknowledgment frame for the first acknowledgment frame, the client determines that the first acknowledgment frame is acknowledged by the front-end server FE, deletes, from reception records, a reception record with a packet number less than or equal to a maximum packet number (the maximum packet number in this example is 130) in the received first data packets. If subsequently receiving a data packet with a packet number less than or equal to 130, the client discards the data packet.

Before the back-end server receives the second packet number range, the back-end server can still transmit a packet by using a packet number in the first packet number range. For example, the packet number corresponding to P3 transmitted by the back-end server BE1 at the moment t5 is less than 130, while the client has not received the fourth acknowledgment frame when the client receives P3. Therefore, P3 is not discarded by the client. This reduces a packet loss rate in a data transmission process, thereby reducing bandwidth resources consumed for data packet retransmission, and improving transmission performance.

In the related art, after receiving an acknowledgment frame transmitted by the client, the front-end server immediately responds to the acknowledgment frame. For example, in the foregoing example, the client transmits the first acknowledgment frame to the front-end server at the moment t3, the front-end server immediately responds to the acknowledgment frame, and the client receives, at the moment t5, an acknowledgment frame fed back by the front-end server for the first acknowledgment frame. The maximum acknowledged packet number corresponding to the first acknowledgment frame is 130, and the client subsequently discards a data packet with a packet number less than or equal to 130. For example, at the moment t6, the data packet P3 that has the packet number falling within (110, 120] and that is received by the client is discarded.

In the foregoing embodiment, when receiving the first acknowledgment frame transmitted by the client based on the received first data packet, the front-end server does not immediately respond to the first acknowledgment frame. The back-end server continuously performs packet transmission actions. Therefore, after transmitting the first data packet, each back-end server further transmits the third data packet by using the first packet number range. When the front-end server determines, based on the third acknowledgment frame, that each back-end server has used the second packet number range to transmit a packet, the front-end server transmits, to the client, the fourth acknowledgment frame used for responding to the first acknowledgment frame, so that the third data packet transmitted by the back-end server by using a packet number in the first packet number range is not discarded by the client, which reduces a packet loss rate in a data transmission process, thereby reducing bandwidth resources consumed for data packet retransmission, and improving transmission performance.

In some embodiments, the data request processing method further includes: establishing a second unidirectional data channel of the second communication link. The transmitting the first acknowledgment frame and a second packet number range to the back-end server based on the second communication link includes: determining, based on the first acknowledgment frame and the first packet number range, whether a packet number allocation condition is met; and when the packet number allocation condition is met, transmitting the first acknowledgment frame and the second packet number range to the back-end server based on the second unidirectional data channel.

The second unidirectional data channel is a channel through which the front-end server transmits data to the back-end server.

In some embodiments, the first acknowledgment frame includes the packet number of the first data packet, and the packet number allocation condition may be that a difference between a maximum packet number included in the first acknowledgment frame and a maximum packet number included in the first packet number range is less than or equal to a preset difference.

The front-end server receives, based on the first communication link, the first acknowledgment frame transmitted by the client, and compares the maximum packet number included in the first acknowledgment frame with the maximum packet number included in the first packet number range allocated to the back-end server. When the difference between the maximum packet number included in the first acknowledgment frame and the maximum packet number included in the first packet number range is less than or equal to the preset difference, the front-end server transmits the first acknowledgment frame and the second packet number range to the back-end server based on the second unidirectional data channel.

The back-end server continuously performs packet transmission actions, and from the back-end server transmitting the first data packet to the front-end server obtaining the first acknowledgment frame, the back-end server transmits a packet by using a packet number in the first packet number range. Therefore, when the front-end server determines that the difference between the maximum packet number included in the first acknowledgment frame and the maximum packet number included in the first packet number range is less than or equal to the preset difference, it indicates a shortage of available packet numbers in the first packet number range, and the second packet number range may be allocated to the back-end server.

In some embodiments, the packet number allocation condition may be that the packet number included in the first acknowledgment frame falls within the first packet number range. When the front-end server determines that the packet number included in the first acknowledgment frame falls within the first packet number range, it indicates that the back-end server has used the first packet number range to transmit a packet. To ensure that sufficient packet numbers are available to the back-end server, the front-end server may allocate the second packet number range to the back-end server.

In some embodiments, when the client concurrently transmits a plurality of data requests, the client receives each first data packet transmitted by each back-end server, and transmits a first acknowledgment frame to the front-end server through the first communication link. The first acknowledgment frame includes a packet number of each first data packet transmitted by each back-end server. When determining that the first acknowledgment frame includes a packet number in a respective corresponding first packet number range of each back-end server, that is, when determining that each back-end server has used the first packet number range to transmit a packet, the front-end server transmits the first acknowledgment frame and a respective corresponding second packet number range to each back-end server.

Packet numbers allocated by the front-end server cannot be repeatedly used. Therefore, first packet number ranges respectively corresponding to the back-end servers are different, second packet number ranges respectively corresponding to the back-end servers are different. The packet numbers allocated by the front-end server are incremental. Therefore, a packet number in each second packet number range is greater than a packet number in each first packet number range.

In the foregoing embodiment, when the front-end server receives the first acknowledgment frame and determines, based on the first acknowledgment frame and the first packet number range, that the packet number allocation condition is met, the front-end server actively allocates the new second packet number range to the back-end server, to ensure that the back-end server has sufficient available packet numbers.

In some embodiments, the data packet further includes a fourth data packet. The data request processing method further includes: receiving, based on the first unidirectional data channel of the second communication link, a packet number obtaining request transmitted by the back-end server; and transmitting a third packet number range to the back-end server in response to the packet number obtaining request, to instruct the back-end server to transmit the fourth data packet based on the third packet number range, a packet number included in the third packet number range being greater than the packet number included in the first packet number range.

The packet number obtaining request includes the stream identifier corresponding to the data request, to instruct the front-end server to determine, based on the stream identifier, a packet number range previously allocated to the back-end server.

In some embodiments, the back-end server may actively obtain a new packet number range from the front-end server depending on consumption of packet number resources. For example, the back-end server obtains a packet number consumption speed and a quantity of available packet numbers, and transmits a packet number obtaining request to the front-end server based on the first unidirectional data channel of the second communication link when determining, based on the packet number consumption speed and the quantity of available packet numbers, that available packet numbers are insufficient.

The front-end server receives the packet number obtaining request based on the first unidirectional data channel, and transmits a third packet number range to the back-end server based on the second unidirectional data channel of the second communication link in response to the packet number obtaining request. The back-end server receives the third packet number range based on the second unidirectional data channel, and encapsulates a part of data in the target data by using a packet number included in the third packet number range, to obtain a fourth data packet.

Because packet numbers allocated by the front-end server are monotonically incremental, and the first packet number range is a packet number range included in the initial signaling, a packet number included in each packet number range subsequently allocated by the front-end server is greater than the packet number included in the first packet number range.

In some embodiments, a quantity of packet numbers included in a packet number range transmitted by the front-end server to the back-end server may be a preset packet number quantity. For example, quantities of packet numbers included in the first packet number range, the second packet number range, and the third packet number range may all be the preset packet number quantity. The preset packet number quantity may be set based on an actual requirement. This is not limited in this embodiment of this application.

In some embodiments, the quantity of packet numbers included in the packet number range transmitted by the front-end server to the back-end server may alternatively be determined based on actual packet number consumption of the back-end server.

After transmitting the first packet number range to the back-end server, the front-end server obtains the packet number obtaining request, determines, based on a quantity of packet numbers included in the first packet number range and a preset multiple, a quantity of packet numbers included in the third packet number range, and transmits the third packet number range to the back-end server based on the quantity of packet numbers included in the third packet number range. The preset multiple may be set based on an actual requirement. This is not limited in this embodiment of this application.

When the front-end server determines, based on the first acknowledgment frame and the first packet number range, that the packet number allocation condition is met, and receives the packet number obtaining request after allocating the first packet number range, a quantity of packet numbers included in the second packet number range is determined based on the quantity of packet numbers included in the first packet number range and the preset multiple, and the second packet number range is transmitted to the back-end server based on the quantity of packet numbers included in the second packet number range.

To be specific, after the front-end server allocates the first packet number range to the back-end server, when the front-end server receives the packet number obtaining request, it indicates that the quantity of packet numbers included in the first packet number range allocated by the front-end server is small. Therefore, the front-end server allocates the second packet number range or the third packet number range based on the quantity of packet numbers included in the first packet number range and the preset multiple. This can reduce a quantity of times of transmitting the packet number obtaining request by the back-end server, and ensure that the back-end server has sufficient available packet numbers.

For example, the preset packet number quantity is 50, and the preset multiple for packet numbers is 2. At a moment t20, the front-end server allocates a first packet number range to the back-end server based on the preset packet number quantity. A quantity of packet numbers included in the first packet number range is 50. At a moment t21, the front-end server obtains a packet number obtaining request transmitted by the back-end server, and allocates a third packet number range to the back-end server based on the preset packet number quantity and the preset multiple for packet numbers. A quantity of packet numbers included in the third packet number range is 100. At a moment t22, the front-end server obtains a first acknowledgment frame, and allocates a second packet number range to the back-end server based on the preset packet number quantity and the preset multiple for packet numbers. A quantity of packet numbers included in the second packet number range is 100.

In the foregoing embodiment, when determining that available packet numbers are insufficient, the back-end server may transmit a packet number obtaining request to the front-end server, to actively obtain a new packet number from the front-end server, which avoids a situation in which there is no available packet number due to passive waiting for the front-end server to allocate a packet number, affecting packet transmission.

In some embodiments, the data request carries initial signaling, and the initial signaling includes client information and flow control information. The migrating the data request to the back-end server based on the second communication link, to instruct the back-end server to create an analog communication connection to the client and transmit a data packet corresponding to the data request to the client based on the analog communication connection includes: transmitting the data request to the back-end server based on the second communication link, to instruct the back-end server to create the analog communication connection to the client based on the client information and transmit the data packet corresponding to the data request to the client through the analog communication connection within a limit of the flow control information.

The client information includes an IP address and a port of the client, and is used for establishing the analog communication connection to the client. The flow control information includes data-channel-level flow control information and communication-connection-level flow control information.

In some embodiments, when establishing the first communication link, the client sets the data-channel-level flow control information and the communication-connection-level flow control information by using a transmission parameter. The communication-connection-level flow control information may reflect a volume of data that can be transmitted by the first communication link. The data-channel-level flow control information limits communication-connection-level flow control information that can be used by a single data channel. For example, a sum of volumes of data that can be transmitted by all data channels is equal to the volume of data that can be transmitted by the first communication link.

The front-end server allocates communication-connection-level flow control information to the back-end server based on the data-channel-level flow control information and the communication-connection-level flow control information. The front-end server transmits, to the back-end server, the data request carrying the initial signaling. The back-end server creates the analog communication connection to the corresponding client based on the client information included in the initial signaling, and transmits the data packet corresponding to the data request to the client through the analog communication connection within limits of the data-channel-level flow control information and the communication-connection-level flow control information that are included in the initial signaling.

In some embodiments, the communication-connection-level flow control information may reflect a capacity of a buffer corresponding to the first communication link in the client, and the back-end server transmits, within the limits of the communication-connection-level flow control information and the data-channel-level flow control information, the data packet corresponding to the data request, to avoid a situation in which the back-end server consumes the entire capacity of the buffer. The communication-connection-level flow control information and the data-channel-level flow control information limit a volume of data transmitted by the back-end server. When a data packet needing to be transmitted by the back-end server exceeds the communication-connection-level flow control information, the back-end server may apply to increase the limit of the communication-connection-level flow control information.

In some embodiments, the flow control information includes a channel window value and a connection window value. During actual application, a connection window value corresponding to the initial signaling may be a first preset connection window value. The preset connection window value may be set based on an actual requirement. For example, the first preset connection window value may be 1 MB.

In some embodiments, when a currently allocated channel window value is far less than a currently available connection window value (for example, the allocated channel window value is less than 1/10 of the currently available connection window value), the connection window value corresponding to the initial signaling may be set to 3/4 of the channel window value, so that the back-end server may update the channel window value when consuming a part of the channel window value. When the currently allocated channel window value is close to the currently available connection window value (for example, the currently allocated channel window value is greater than 9/10 of the currently available connection window value), the connection window value corresponding to the initial signaling may be set to a smaller value of a second preset connection window value and the currently available connection window value. The second preset connection window value may be set based on an actual requirement. For example, the second preset connection window value may be 256 KB.

In some embodiments, when the client concurrently transmits a plurality of data requests, the front-end server allocates communication-connection-level flow control information to back-end servers respectively corresponding to the plurality of data requests, so that each back-end server can obtain required communication-connection-level flow control information in time. The communication-connection-level flow control information allocated to each back-end server is less than communication-connection-level flow control information of the front-end server, and a sum of the communication-connection-level flow control information of the back-end servers is less than the communication-connection-level flow control information of the front-end server, so that when a new communication connection is created subsequently, communication-connection-level flow control information may be allocated to the created new communication connection. After the back-end server ends responding to the data request, if there is unused communication-connection-level flow control information, the unused communication-connection-level flow control information may be returned to the front-end server for allocation to another back-end server by the front-end server.

In the foregoing embodiment, the front-end server migrates, to the back-end server, the data request carrying the initial signaling, so that the back-end server creates the analog communication connection to the client based on the client information included in the initial signaling, and transmits, within the limit of the flow control information, the data packet corresponding to the data request, which avoids a situation in which the back-end server continues to transmit a data packet when the buffer corresponding to the first communication link in the client is full, causing data loss. This reduces a data retransmission rate, and improves transmission performance.

In some embodiments, the flow control information includes a channel window value and a connection window value. The data request processing method further includes: receiving, based on the first communication link, a target channel offset transmitted by the client; updating the channel window value based on the target channel offset, to obtain an updated channel window value; and transmitting the updated channel window value to the back-end server based on the second unidirectional data channel of the second communication link. The transmitting the data packet used for responding to the data request to the client through the analog communication connection within a limit of the flow control information includes: transmitting the data packet used for responding to the data request to the client through the analog communication connection within limits of the updated channel window value and the connection window value.

The connection window value indicates a quantity, corresponding to the first communication link, of bytes allowed to be transmitted. The channel window value and the connection window value indicate a quantity of bytes allowed to be transmitted when the back-end server responds to the data request.

In some embodiments, the client transmits a maximum stream offset (MAX_STREAM_DATA) frame to the front-end server through the first communication link. When an offset in the MAX_STREAM_DATA frame with respect to a maximum volume of data that can be transmitted is updated, a target channel offset is determined based on the MAX_STREAM_DATA frame, the channel window value included in the flow control information is updated based on the target channel offset, to obtain an updated channel window value, and the updated channel window value is transmitted to the back-end server based on the second unidirectional data channel of the second communication link. The back-end server receives the updated channel window value based on the second unidirectional data channel of the second communication link, and transmits the data packet used for responding to the data request to the client through the analog communication connection within limits of the updated channel window value and the connection window value.

In the foregoing embodiment, the client may update the channel window value, so that the back-end server transmits a packet within the limits of the updated channel window value and the connection window value. When the updated channel window value is greater than the channel window value included in the flow control information, a situation in which there is no available channel window value during data transmission is avoided, a delay caused by the back-end server waiting for an available channel window value to be allocated is reduced, continuous transmission of the target data corresponding to the data request is ensured, and data transmission efficiency is improved.

In some embodiments, the flow control information includes a channel window value and a connection window value. The data request processing method further includes: receiving, based on the first communication link, a target connection offset transmitted by the client; updating the connection window value based on the target connection offset, to obtain an updated connection window value; and transmitting the updated connection window value to the back-end server based on the second unidirectional data channel of the second communication link. The transmitting the data packet used for responding to the data request to the client through the analog communication connection within a limit of the flow control information includes: transmitting the data packet used for responding to the data request to the client through the analog communication connection within limits of the updated connection window value and the channel window value.

In some embodiments, the client transmits a maximum connection offset (MAX_DATA) frame to the front-end server through the first communication link. When an offset in the MAX_DATA frame with respect to a maximum volume of data that can be transmitted is updated, a target connection offset is determined based on the MAX_DATA frame, the connection window value included in the flow control information is updated based on the target connection offset, to obtain an updated connection window value, and the updated connection window value and the channel window value are transmitted to the back-end server based on the second unidirectional data channel of the second communication link, so that the back-end server transmits a packet within limits of the updated connection window value and the channel window value.

In some embodiments, the front-end server updating the connection window value based on the target connection offset, to obtain an updated connection window value may be: determining an updated total connection window value based on the target connection offset; determining a reference variation based on a variation between the updated total connection window value and a total connection window value before the update, a consumption rate of a connection window value of a currently maintained communication connection, and a ratio; and updating the connection window value based on the reference variation, to obtain an updated connection window value.

In some embodiments, after receiving updated flow control information based on the second unidirectional data channel of the second communication link, the back-end server transmits resource information to the front-end server based on the first unidirectional data channel of the second communication link. The resource information includes the updated flow control information and a consumption speed, so that the front-end server determines consumption of the flow control information of the back-end server based on the resource information. When the flow control information of the front-end server is insufficient, the front-end server may transmit a flow control information return instruction to the back-end server through the second unidirectional data channel of the second communication link. When there is available flow control information in the back-end server, the back-end server may return the available flow control information based on the flow control information return instruction.

In the foregoing embodiment, the client may update the connection window value, so that the back-end server transmits a packet within the limits of the channel window value and the updated connection window value. When the updated connection window value is greater than the connection window value included in the flow control information, it is ensured that the target data used for responding to the data request can be continuously transmitted, and data transmission efficiency is improved.

In some embodiments, the initial signaling further includes an initial CID. The data request processing method further includes: receiving, based on the first communication link, an update CID frame transmitted by the client; obtaining a target CID based on the update CID frame; transmitting the target CID to the back-end server based on the second unidirectional data channel of the second communication link, to instruct the back-end server to transmit, to the client through the analog communication connection, a data packet carrying the target CID; and transmitting a retire CID frame to the client based on the first communication link, the retire CID frame indicating the client to mark the initial CID in a retired state, mark the target CID in a used state, and receive the data packet carrying the target CID.

The CID is a CID of the first communication link, and the CID in this embodiment is a source CID (SCID) generated by the client. The initial CID is a CID included in the initial signaling.

A short packet header of a data packet transmitted by the back-end server includes a CID. The client obtains a CID based on a short packet header of a received data packet. When the CID is inconsistent with the CID generated by the client, the client discards the data packet. Therefore, when the client updates the CID, the back-end server needs to update the CID in time, to avoid packet loss.

In some embodiments, the client transmits an update CID (new_CONNECTION ID) frame to the front-end server based on the first communication link. The front-end server determines a target CID based on the new_CONNECTION_ID frame, transmits the target CID to the back-end server based on the second unidirectional data channel of the second communication link, and then transmits a retire CID (RETIRE_CONNECTION_ID) frame to the client based on the first communication link. The client marks the initial CID in a retired state based on the RETIRE_CONNECTION_ID frame, marks the target CID in a used state, and retires the initial CID. If subsequently receiving a data packet with a short packet header including the initial CID, the client discards the data packet.

In some embodiments, the front-end server transmits the target CID to the back-end server based on the second unidirectional data channel of the second communication link, and after the back-end server transmits, to the client, the data packet carrying the target CID, the front-end server transmits the retire CID frame to the client based on the first communication link. In other words, after determining that the back-end server replaces the initial CID with the target CID, the front-end server transmits the retire CID frame to the client.

In the foregoing embodiment, after receiving the update CID frame, the front-end server first transmits the target CID determined based on the update CID frame to the back-end server, and then feeds back the retire CID frame to the client, which avoids a situation in which a data packet is discarded by the client because the back-end server first feeds back the retire CID frame to the client while the back-end server has not received the target CID and still uses the initial CID to transmit a packet, thereby reducing a packet loss rate, and improving data transmission efficiency.

In some embodiments, the data request processing method further includes: receiving, based on the first communication link, an update session key identifier transmitted by the client; determining a target session key based on the update session key identifier, the target session key being obtained by updating an initial session key included in the initial signaling; and transmitting the update session key identifier to the back-end server based on the second unidirectional data channel of the second communication link, to instruct the back-end server to determine the target session key based on the update session key identifier, and encrypt, based on the target session key, the data packet used for responding to the data request.

The initial signaling includes an initial session key, and the initial session key is a session key jointly determined by the client and the front-end server when the client establishes the first communication link to the front-end server.

In some embodiments, the front-end server transmits the initial signaling including the initial session key to the back-end server based on the second communication link. The back-end server receives the initial signaling, encrypts, by using the session key in the initial signaling, the data packet corresponding to the data request, and transmits an encrypted data packet to the client through the analog communication connection. The client decrypts the encrypted data packet by using the initial session key, to obtain the data packet.

To ensure security of data transmission, the client may update the initial session key. The client determines a target session key, and transmits an update session key identifier (key_phase) to the front-end server based on the first communication link. The front-end server obtains key_phase based on the first communication link, and determines the target session key based on key_phase and the initial session key. The front-end server replaces the initial session key with the target session key, and transmits key_phase to the back-end server based on the second unidirectional data channel of the second communication link. The back-end server receives key_phase based on the second unidirectional data channel of the second communication link, determines the target session key based on key_phase and the initial session key, encrypts, by using the target session key, the data packet corresponding to the data request, and transmits an encrypted data packet to the client through the analog communication connection. The client decrypts the encrypted data packet by using the target session key, to obtain the data packet.

After the initial session key is updated to the target session key, if key_phase is subsequently obtained again, an updated session key is determined based on the obtained key_phase and the target session key. That is, each time key_phase is obtained, an updated session key is determined by using the obtained key_phase and a currently used session key.

The data corresponding to the data request includes a plurality of data packets. The back-end server may encrypt a first part of the plurality of data packets based on the initial session key, and after the initial session key is updated to the target session key, the back-end server may encrypt a second part of the plurality of data packets based on the target session key.

In some embodiments, the front-end server receives, based on the first unidirectional data channel of the second communication link, a currently used session key and an encryption quantity corresponding to the currently used session key. The currently used session key and the corresponding encryption quantity are transmitted when the back-end server receives a packet number range transmitted by the front-end server. When determining that the encryption quantity is greater than or equal to an encryption threshold, the front-end server generates a new session key, transmits the new session key to the client through the first communication link, and transmits the new session key to the back-end server through the second unidirectional data channel of the second communication link, so that the client and the back-end server replace the currently used session key with the new session key.

The currently used session key may be the initial session key, the target session key, or another session key. The encryption quantity corresponding to the currently used session key is a quantity of data packets encrypted by using the currently used session key. The packet number range transmitted by the front-end server may be the second packet number range, the third packet number range, or another packet number range. The encryption threshold may be set based on an actual requirement. This is not limited in this embodiment of this application.

This embodiment is a solution in which the front-end server initiates session key update. When receiving the packet number range transmitted by the front-end server, the back-end server transmits the currently used session key and the encryption quantity corresponding to the currently used session key to the front-end server based on the first unidirectional data channel of the second communication link. When the encryption quantity corresponding to the currently used session key reaches the encryption threshold, the front-end server actively updates the session key.

In the foregoing embodiment, the client initiates the update session key identifier, and the front-end server synchronizes the update session key identifier to the back-end server, so that the back-end server determines the target session key based on the update session key identifier, encrypts, by using the target session key, the data packet corresponding to the data request, and updates the initial session key, which improves security of data transmission.

In some embodiments, the data request processing method further includes: receiving, based on the first communication link, a fifth acknowledgment frame transmitted by the client, the fifth acknowledgment frame being transmitted when the client receives a data packet encrypted based on the target session key; and feeding back a sixth acknowledgment frame to the client based on the first communication link, to instruct the client to determine that the initial session key is updated to the target session key.

The sixth acknowledgment frame is an acknowledgment frame transmitted for the update session key identifier.

In some embodiments, after receiving a data packet encrypted based on the target session key, the client transmits a fifth acknowledgment frame to the front-end server based on the first communication link. When the front-end server determines, based on the fifth acknowledgment frame, that the back-end server has used the target session key to encrypt a data packet, the front-end server feeds back a sixth acknowledgment frame for the update session key identifier to the client based on the first communication link. The client determines, based on the sixth acknowledgment frame, that the initial session key is updated to the target session key, and then eliminates the initial session key.

In some embodiments, the transmitting the target session key to the back-end server based on the second unidirectional data channel of the second communication link further includes: transmitting the update session key identifier and a fourth packet number range to the back-end server based on the second unidirectional data channel of the second communication link, to instruct the back-end server to encapsulate, by using a packet number in the fourth packet number range, data corresponding to the data request to obtain a data packet, determine the target session key based on the update session key identifier, and encrypt the data packet by using the target session key. The front-end server receives a fifth acknowledgment frame, and when the fifth acknowledgment frame includes a packet number in the fourth packet number range, the front-end server determines that the fifth acknowledgment frame is transmitted when the client receives a data packet encrypted based on the target session key.

When receiving the update session key identifier transmitted by the client, the front-end server allocates a new packet number range (the fourth packet number range) to the back-end server, so that the back-end server transmits a packet by using the fourth packet number range and the target session key. When determining, based on the fifth acknowledgment frame, that the back-end server has used the fourth packet number range to transmit a packet, the front-end server feeds back a sixth acknowledgment frame for the update session key identifier.

In the related art, when receiving the update session key identifier, the front-end server immediately feeds back an acknowledgment frame for the update session key identifier, which may result in a situation in which the client determines that the initial session key is updated to the target session key and cancels the initial session key before the back-end server synchronously updates the initial session key to the target session key, so that a data packet encrypted by the back-end server by using the initial session key is discarded by the client, affecting data transmission.

In the foregoing embodiment, the front-end server determines, based on the fifth acknowledgment frame, that the back-end server has used the target session key to encrypt a data packet, and then feeds back the sixth acknowledgment frame for the update session key identifier, which avoids a situation in which the client determines, before the back-end server synchronously updates the initial session key to the target session key, that the initial session key is updated to the target session key, resulting in that a data packet encrypted by the back-end server by using the initial session key is discarded by the client. This reduces a packet loss rate and improves transmission efficiency.

In some embodiments, the initial signaling includes a four-tuple. The four-tuple includes: an IP address and a port of the client, and an IP address and a port of the back-end server. When the IP address and port of the client are changed, the front-end server transmits a changed IP address and port of the client to the back-end server based on the second unidirectional data channel of the second communication link, to instruct the back-end server to transmit, by using the changed IP address and port, the data packet corresponding to the data request.

In this embodiment, when the IP address and port of the client are changed, the client transmits a packet to the front-end server by using the changed IP address and port, and subsequently, the front-end server also transmits a packet to the client by using the changed IP address and port. The front-end server transmits the changed IP address and port of the client to the back-end server based on the second unidirectional data channel of the second communication link, and the back-end server uses the changed IP address and port.

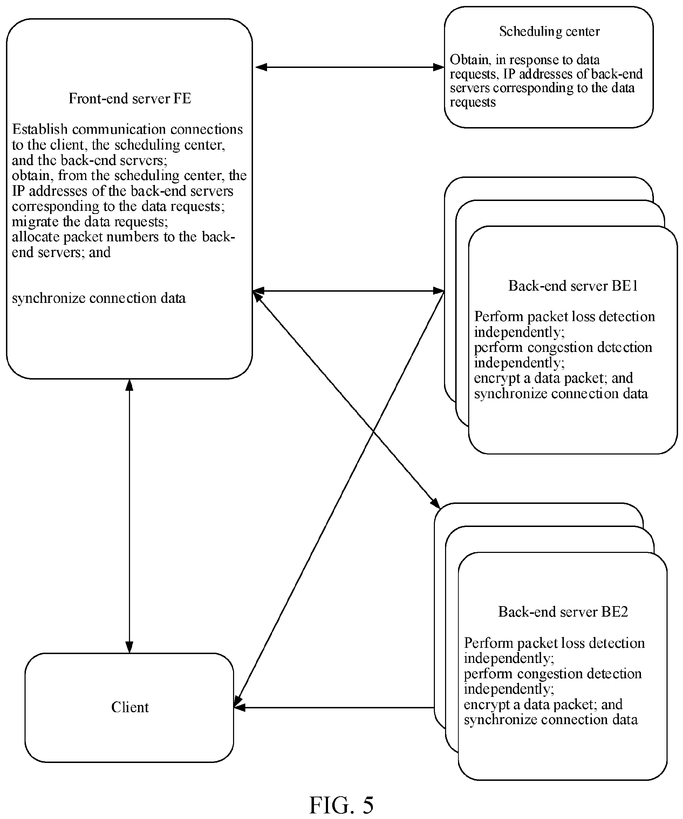

In some embodiments, the data request processing method may be applied to a scenario in which to-be-played data is obtained during a live video. As shown in FIG. 5, an example that a client concurrently transmits two data requests is used for description. The data request processing method is cooperatively performed by the client, a front-end server FE, a scheduling center, a back-end server BE1, and a back-end server BE2. The front-end server FE is configured for establishing communication connections to the client, the scheduling center, and the back-end servers, maintaining the established communication connections, obtaining, from the scheduling center, IP addresses of back-end servers corresponding to the data requests, migrating the data requests, allocating packet numbers to the back-end servers, and synchronizing connection data, including synchronizing acknowledgment frames, updated CIDs, updated session keys, and the like. The back-end server BE1 and the back-end server BE2 may independently perform packet loss detection and congestion detection, and are further configured for encrypting to-be-transmitted data packets and synchronizing connection data. The scheduling center is configured for obtaining, in response to the data requests, the IP addresses of the back-end servers corresponding to the data requests.

The live video is watched by using the client. A first communication link is created between the client and the front-end server FE. The client transmits the two data requests, namely, a data request 1 and a data request 2, to the front-end server FE based on the first communication link. The front-end server FE forwards each data request to the scheduling center through the communication connection to the scheduling center. The scheduling center determines an IP address of a back-end server corresponding to each data request. The front-end server FE receives the IP address of each back-end server scheduled by the scheduling center.

The front-end server FE creates a second communication link Q21 to the back-end server BE1 based on an IP address of a back-end server corresponding to the data request 1, and creates a second communication link Q22 to the back-end server BE2 based on an IP address of a back-end server corresponding to the data request 2.

The front-end server FE migrates the data request 1 to the back-end server BE1 based on Q21, and the back-end server BE1 creates an analog communication connection to the client. The front-end server FE migrates the data request 2 to the back-end server BE2 based on Q22, and the back-end server BE2 creates an analog communication connection to the client.

The back-end server BE1 obtains target data corresponding to the data request 1, and transmits a data packet corresponding to the data request 1 to the client through the analog communication connection to the client. The back-end server BE2 obtains target data corresponding to the data request 2, and transmits a data packet corresponding to the data request 2 to the client by through the analog communication connection to the client.

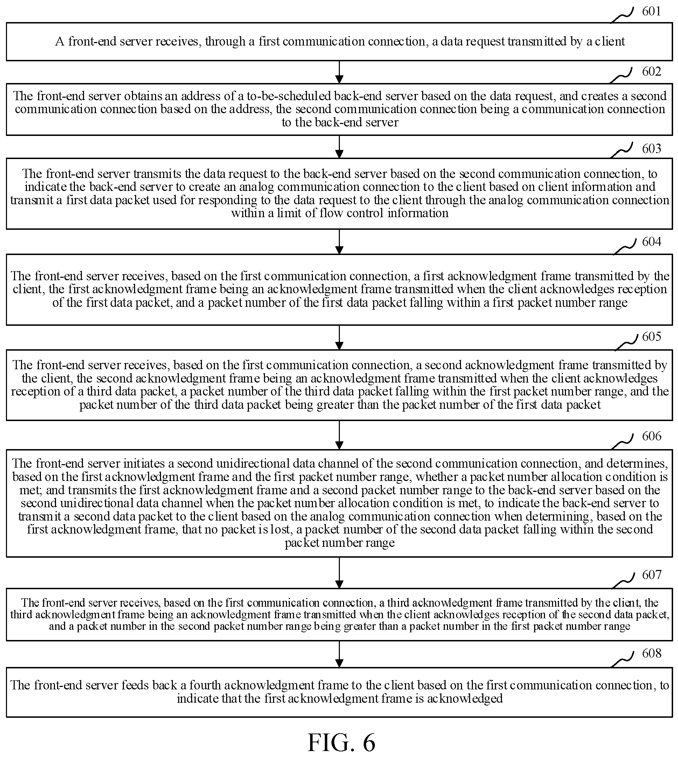

In some embodiments, as shown in FIG. 6, a data request processing method includes the following operations:
Operation 601: A front-end server receives, through a first communication link, a data request transmitted by a client.
Operation 602: The front-end server obtains an address of a to-be-scheduled back-end server based on the data request, and creates a second communication link based on the address, the second communication link being a communication connection to the back-end server.
Operation 603: The front-end server transmits the data request to the back-end server based on the second communication link, to instruct the back-end server to create an analog communication connection to the client based on client information and transmit a first data packet used for responding to the data request to the client through the analog communication connection within a limit of flow control information.
Operation 604: The front-end server receives, based on the first communication link, a first acknowledgment frame transmitted by the client, the first acknowledgment frame being an acknowledgment frame transmitted when the client acknowledges reception of the first data packet, and a packet number of the first data packet falling within a first packet number range.
Operation 605: The front-end server receives, based on the first communication link, a second acknowledgment frame transmitted by the client, the second acknowledgment frame being an acknowledgment frame transmitted when the client acknowledges reception of a third data packet, a packet number of the third data packet falling within the first packet number range, and the packet number of the third data packet being greater than the packet number of the first data packet.
Operation 606: The front-end server initiates a second unidirectional data channel of the second communication link, and determines, based on the first acknowledgment frame and the first packet number range, whether a packet number allocation condition is met; and transmits the first acknowledgment frame and a second packet number range to the back-end server based on the second unidirectional data channel when the packet number allocation condition is met, to instruct the back-end server to transmit a second data packet to the client based on the analog communication connection when determining, based on the first acknowledgment frame, that no packet is lost, a packet number of the second data packet falling within the second packet number range.
Operation 607: The front-end server receives, based on the first communication link, a third acknowledgment frame transmitted by the client, the third acknowledgment frame being an acknowledgment frame transmitted when the client acknowledges reception of the second data packet, and a packet number in the second packet number range being greater than a packet number in the first packet number range.
Operation 608: The front-end server feeds back a fourth acknowledgment frame to the client based on the first communication link, to instruct that the first acknowledgment frame is acknowledged.

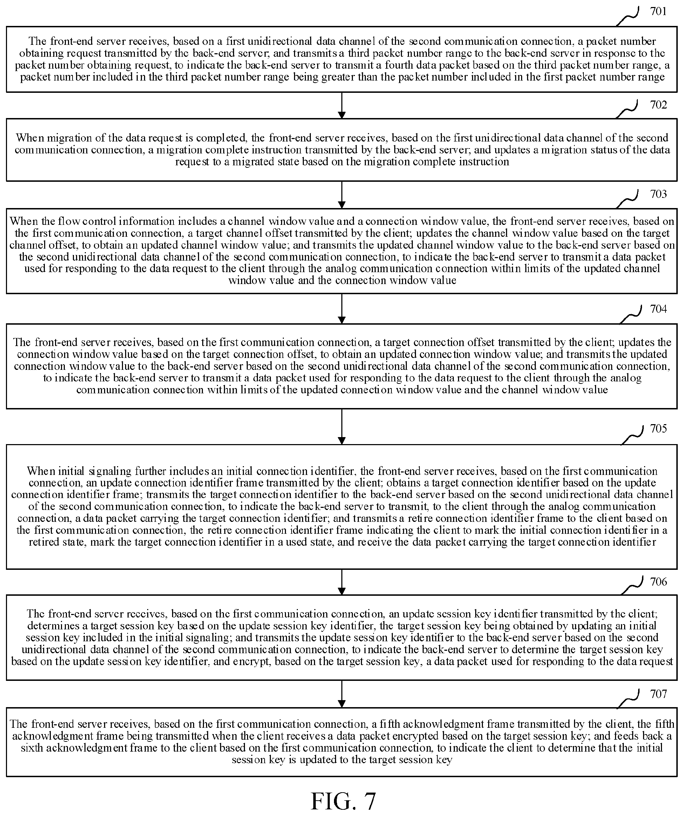

In some embodiments, as shown in FIG. 7, the data request processing method further includes the following operations:
Operation 701: The front-end server receives, based on a first unidirectional data channel of the second communication link, a packet number obtaining request transmitted by the back-end server; and transmits a third packet number range to the back-end server in response to the packet number obtaining request, to instruct the back-end server to transmit a fourth data packet based on the third packet number range, a packet number included in the third packet number range being greater than the packet number included in the first packet number range.
Operation 702: When transmission of the data request is completed, the front-end server receives, based on the first unidirectional data channel of the second communication link, a transmission complete instruction transmitted by the back-end server; and updates a transmission module of the data request to a migrated state based on the transmission complete instruction.
Operation 703: When the flow control information includes a channel window value and a connection window value, the front-end server receives, based on the first communication link, a target channel offset transmitted by the client; updates the channel window value based on the target channel offset, to obtain an updated channel window value; and transmits the updated channel window value to the back-end server based on the second unidirectional data channel of the second communication link, to instruct the back-end server to transmit a data packet used for responding to the data request to the client through the analog communication connection within limits of the updated channel window value and the connection window value.
Operation 704: The front-end server receives, based on the first communication link, a target connection offset transmitted by the client; updates the connection window value based on the target connection offset, to obtain an updated connection window value; and transmits the updated connection window value to the back-end server based on the second unidirectional data channel of the second communication link, to instruct the back-end server to transmit a data packet used for responding to the data request to the client through the analog communication connection within limits of the updated connection window value and the channel window value.
Operation 705: When initial signaling further includes an initial CID, the front-end server receives, based on the first communication link, an update CID frame transmitted by the client; obtains a target CID based on the update CID frame; transmits the target CID to the back-end server based on the second unidirectional data channel of the second communication link, to instruct the back-end server to transmit, to the client through the analog communication connection, a data packet carrying the target CID; and transmits a retire CID frame to the client based on the first communication link, the retire CID frame indicating the client to mark the initial CID in a retired state, mark the target CID in a used state, and receive the data packet carrying the target CID.
Operation 706: The front-end server receives, based on the first communication link, an update session key identifier transmitted by the client; determines a target session key based on the update session key identifier, the target session key being obtained by updating an initial session key included in the initial signaling; and transmits the update session key identifier to the back-end server based on the second unidirectional data channel of the second communication link, to instruct the back-end server to determine the target session key based on the update session key identifier, and encrypt, based on the target session key, a data packet used for responding to the data request.
Operation 707: The front-end server receives, based on the first communication link, a fifth acknowledgment frame transmitted by the client, the fifth acknowledgment frame being transmitted when the client receives a data packet encrypted based on the target session key; and feeds back a sixth acknowledgment frame to the client based on the first communication link, to instruct the client to determine that the initial session key is updated to the target session key.

In the foregoing embodiment, the front-end server receives, through the first communication link to the client, the data request transmitted by the client, and obtains the address of the to-be-scheduled back-end server based on the data request, to establish the second communication link to the back-end server. The front-end server migrates the data request to the back-end server through the second communication link, so that the back-end server creates the analog communication connection to the client. The back-end server directly transmits the data packet used for responding to the data request to the client based on the analog communication connection. The front-end server performs request-level scheduling, and determines that the to-be-scheduled back-end server has data for responding to the data request, so that the back-end server can directly respond to the data request without obtaining, from a source, the data for responding to the data request, which reduces a delay and communication overheads between servers. The back-end server directly transmits the data packet to the client through the analog communication connection, instead of the back-end server transmitting the data packet to the front-end server and then the front-end server transmitting the data packet to the client, which reduces bandwidth consumption between the back-end server and the front-end server, reduces downlink traffic pressure of the front-end server, increases an uplink throughput of the front-end server, reduces a delay, and improves transmission performance.

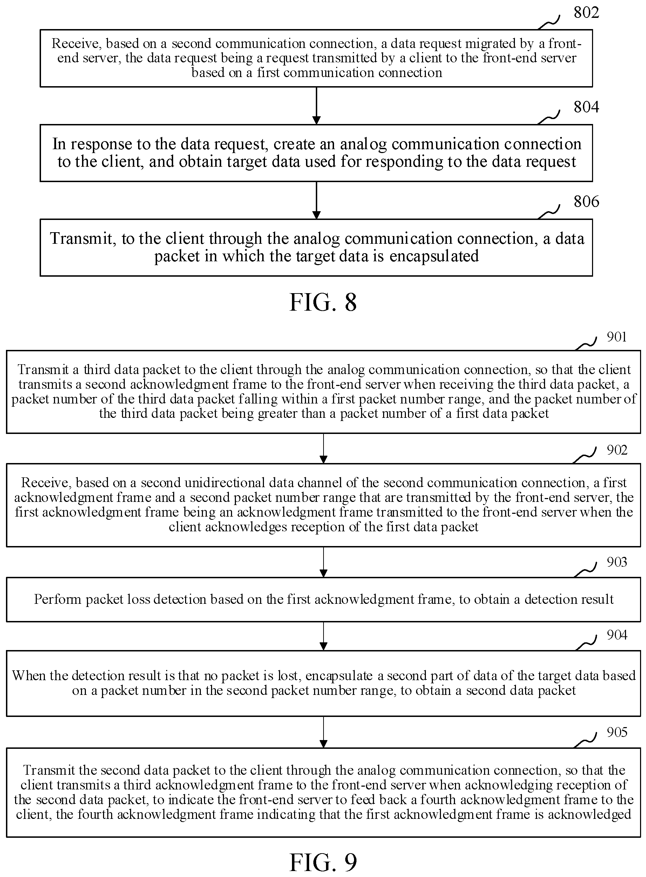

In some embodiments, as shown in FIG. 8, a data request processing method is provided. An example that the method is applied to the back-end server in FIG. 1 is used for description. The method includes the following operations:
Operation 802: Receive, based on a second communication link, a data request transmitted by a front-end server, the data request being a request transmitted by a client to the front-end server based on a first communication link.
Operation 804: In response to the data request, create an analog communication connection between the back-end server and the client, and obtain target data used for responding to the data request.
Operation 806: Transmit, to the client through the analog communication connection, a data packet in which the target data is encapsulated.

For detailed processes of operation 802 to operation 806, refer to the foregoing embodiment of operation 202 to operation 206.

In the foregoing embodiment, the front-end server receives, through the first communication link to the client, the data request transmitted by the client, and obtains the address of the to-be-scheduled back-end server based on the data request, to establish the second communication link to the back-end server. The front-end server migrates the data request to the back-end server through the second communication link, so that the back-end server creates the analog communication connection to the client. The back-end server directly transmits the data packet used for responding to the data request to the client based on the analog communication connection. The front-end server performs request-level scheduling, and determines that the to-be-scheduled back-end server has the data for responding to the data request, so that the back-end server can directly respond to the data request without obtaining, from a source, the data for responding to the data request, which reduces a delay and communication overheads between servers. The back-end server directly transmits the data packet to the client through the analog communication connection, instead of the back-end server transmitting the data packet to the front-end server and then the front-end server transmitting the data packet to the client, which reduces bandwidth consumption between the back-end server and the front-end server, reduces downlink traffic pressure of the front-end server, increases an uplink throughput of the front-end server, reduces a delay, and improves transmission performance.

In some embodiments, after the receiving, based on a second communication link, a data request migrated by a front-end server, the method further includes: when the transmission of the data request is completed, creating a first unidirectional data channel of the second communication link; and transmitting a transmission complete instruction to the front-end server based on the first unidirectional data channel, to instruct the front-end server to update a transmission module of the data request to a migrated state.

In this embodiment, for a detailed process in which the back-end server creates the first unidirectional data channel, and transmits the transmission complete instruction to the front-end server based on the first unidirectional data channel, and the front-end server updates the transmission module of the data request based on the transmission complete instruction, refer to related descriptions in the foregoing embodiment of the front-end server receiving, based on the first unidirectional data channel of the second communication link, the transmission complete instruction transmitted by the back-end server, and updating the transmission module of the data request based on the transmission complete instruction.

In the foregoing embodiment, the back-end server may actively initiate the first unidirectional data channel, and transmit the transmission complete instruction to the front-end server based on the first unidirectional data channel, without waiting for the front-end server to create a data channel, which improves real-time of updating the transmission module. In addition, compared with a bidirectional data channel, the unidirectional data channel needs less flow control information, so that resources consumed for data transmission are reduced.

In some embodiments, the data packet includes a first data packet. The transmitting, to the client through the analog communication connection, a data packet in which the target data is encapsulated includes: determining a first packet number range based on the migrated data request; encapsulating a first part of data of the target data based on a packet number in the first packet number range, to obtain the first data packet; and transmitting the first data packet to the client through the analog communication connection.

The migrated data request carries initial signaling, and the initial signaling includes the first packet number range. The first part of data is data encapsulated by using a packet number in the first packet number range.

In some embodiments, the back-end server obtains the first packet number range carried in the migrated data request, encapsulates the first part of data of the target data by using a packet number in the first packet number range, to obtain the first data packet, and transmits the first data packet to the client through the analog communication connection.

When the back-end server performs encapsulation to obtain a first data packet, it is not necessary to use up all packet numbers in the first packet number range. A packet transmission process of the back-end server is performed continuously. The back-end server may encapsulate a first part of data of the target data by using a part of packet numbers in the first packet number range, to obtain a first data packet, and then may encapsulate another part of data of the target data by using another part of packet numbers in the first packet number range, to obtain another first data packet. For example, the first packet number range is (100, 120], and the first part of data may be encapsulated by using a packet number falling within (100, 110], to obtain the first data packet.

In the foregoing embodiment, the back-end server determines the first packet number range based on the migrated data request, so that the back-end server receives the first packet number range at the same time when receiving the data request. When transmitting a corresponding data packet for responding to the data request, the back-end server may directly use a packet number included in the first packet number range, without further obtaining an available packet number, or waiting for the front-end server to transmit an available packet number. This reduces a data transmission delay and improves data transmission efficiency.

In some embodiments, the data packet further includes a second data packet and a third data packet. As shown in FIG. 9, after the transmitting the first data packet to the client through the analog communication connection, the method further includes the following operations:
Operation 901: Transmit the third data packet to the client through the analog communication connection, so that the client transmits a second acknowledgment frame to the front-end server when receiving the third data packet, a packet number of the third data packet falling within the first packet number range, and the packet number of the third data packet being greater than the packet number of the first data packet.
Operation 902: Receive, based on a second unidirectional data channel of the second communication link, a first acknowledgment frame and a second packet number range that are transmitted by the front-end server, the first acknowledgment frame being an acknowledgment frame transmitted to the front-end server when the client acknowledges reception of the first data packet.
Operation 903: Perform packet loss detection based on the first acknowledgment frame, to obtain a detection result.
Operation 904: When the detection result is that no packet is lost, encapsulate a second part of data of the target data based on a packet number in the second packet number range, to obtain the second data packet.
Operation 905: Transmit the second data packet to the client through the analog communication connection, so that the client transmits a third acknowledgment frame to the front-end server when acknowledging reception of the second data packet, to instruct the front-end server to feed back a fourth acknowledgment frame to the client, the fourth acknowledgment frame indicating that the first acknowledgment frame is acknowledged.

In this embodiment, for detailed descriptions of the back-end server transmitting the third data packet, receiving the first acknowledgment frame and the second packet number range, and transmitting the second data packet, refer to related descriptions in the foregoing embodiment of the front-end server receiving the second acknowledgment frame transmitted when the client receives the third data packet, transmitting the first acknowledgment frame and the second packet number range to the back-end server, receiving the third acknowledgment frame transmitted when the client receives the second data packet, and feeding back the fourth acknowledgment frame to the client.

In some embodiments, when the detection result is that no packet is lost, the back-end server may select acknowledgment information that is in the first acknowledgment frame and that falls within the first packet number range, perform congestion detection based on the acknowledgment information, to obtain a congestion window and a packet transmission rate, and transmit the second data packet to the client based on the congestion window and the packet transmission rate.

In the foregoing embodiment, when receiving the first acknowledgment frame transmitted by the client based on the received first data packet, the front-end server does not immediately respond to the first acknowledgment frame. The back-end server continuously performs packet transmission actions. Therefore, after transmitting the first data packet, each back-end server further transmits the third data packet by using the first packet number range. When the front-end server determines, based on the third acknowledgment frame, that each back-end server has used the second packet number range to transmit a packet, the front-end server transmits the fourth acknowledgment frame for the first acknowledgment frame to the client, so that the third data packet transmitted by the back-end server by using a packet number in the first packet number range is not discarded by the client, which reduces a packet loss rate in a data transmission process, thereby reducing bandwidth resources consumed for data packet retransmission, and improving transmission performance.

In some embodiments, the performing packet loss detection based on the first acknowledgment frame, to obtain a detection result includes: selecting acknowledgment information that is in the first acknowledgment frame and that falls within the first packet number range; and performing packet loss detection based on the acknowledgment information, to obtain a detection result. The data packet further includes a retransmitted data packet. The data request processing method further includes: when the detection result is that a packet is lost, performing congestion detection based on the acknowledgment information, to obtain a congestion window and a packet transmission rate; re-encapsulating data of the lost packet based on a packet number in the second packet number range, to obtain the retransmitted data packet; and transmitting the retransmitted data packet to the client through the analog communication connection based on the congestion window and the packet transmission rate.

The acknowledgment information is information about a packet number falling within the first packet number range in the first acknowledgment frame, and includes the packet number falling within the first packet number range. The congestion window is used for limiting a data volume for transmitting a data packet. The packet transmission rate is a rate for transmitting a data packet.

In some embodiments, the first acknowledgment frame may include packet numbers of first data packets transmitted by a plurality of back-end servers. After receiving the first acknowledgment frame, the back-end server selects corresponding acknowledgment information based on the first packet number range. The back-end server performs packet loss detection based on the packet number included in the acknowledgment information and the packet number of the transmitted first data packet. When the packet number included in the acknowledgment information is consistent with the packet number of the first data packet, it is determined that a detection result is that no packet is lost. When the packet number included in the acknowledgment information is inconsistent with the packet number of the first data packet, it is determined that the detection result is that a packet is lost.

When the detection result is that a packet is lost, congestion detection is performed based on the acknowledgment information, to obtain a congestion window and a packet transmission rate; data of the lost packet is determined based on the packet number included in the acknowledgment information and the packet number of the first data packet; the data of the lost packet is re-encapsulated by using a packet number in the second packet number range, to obtain a retransmitted data packet; and the retransmitted data packet is transmitted to the client through the analog communication connection based on the congestion window and the packet transmission rate. In the related art, congestion detection is also referred to as congestion control.

In some embodiments, there are a plurality of retransmitted data packets. The transmitting the retransmitted data packet to the client based on the congestion window and the packet transmission rate means that a quantity of bytes of the plurality of retransmitted data packets does not exceed the data volume corresponding to the congestion window, and a rate at which the plurality of retransmitted data packets are transmitted does not exceed the packet transmission rate.

In some embodiments, when the client concurrently transmits a plurality of data requests, the client receives first data packets transmitted by back-end servers by using respective corresponding first packet number ranges, and transmits a first acknowledgment frame to the front-end server. The first acknowledgment frame includes packet numbers falling within first packet number ranges respectively corresponding to the back-end servers. The front-end server transmits the first acknowledgment frame to each back-end server, and each back-end server selects, based on the first acknowledgment frame, acknowledgment information falling within a first packet number range of the back-end server.

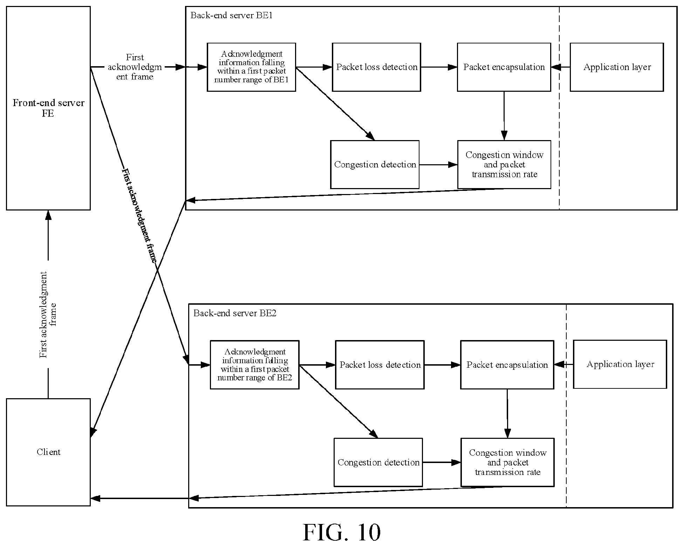

For example, as shown in FIG. 10, the back-end servers are a back-end server BE1 and a back-end server BE2. The front-end server FE transmits, to BE1, the first acknowledgment frame and a second packet number range allocated to BE1, and transmits, to BE2, the first acknowledgment frame and a second packet number range allocated to BE2. BE1 is used as an example for description. BE1 selects acknowledgment information that is in the first acknowledgment frame and that falls within a first packet number range of BE1; performs packet loss detection based on the acknowledgment information; when determining that a packet is lost, performs congestion detection based on the acknowledgment information, to obtain a congestion window and a packet transmission rate; re-encapsulates data of the lost packet by using a packet number in the second packet number range received by BE1, to obtain a retransmitted data packet; and transmits the retransmitted data packet to the client based on the congestion window and the packet transmission rate.

In the foregoing embodiment, the back-end server receives the first acknowledgment frame, performs packet loss detection based on the first acknowledgment frame, and may transmit a retransmitted data packet in time when determining that a packet is lost. The retransmitted data packet is transmitted to the client based on a congestion window and a packet transmission rate, so that loss of the retransmitted data packet due to congestion can be reduced, and the client can receive the retransmitted data packet in time. During actual application, loading waiting or page freezing occurring on the client due to the data of the lost packet is avoided, thereby improving data transmission efficiency.

In some embodiments, maximum transmission unit detection of the back-end server and maximum transmission unit detection of the front-end server are independent of each other. A maximum transmission unit is a maximum transmission unit that does not need to be fragmented when the back-end server (or the front-end server) transmits data to the client. Through the maximum transmission unit detection, to-be-transmitted data may be fragmented based on a size of the maximum transmission unit for transmission, so that the back-end server (or the front-end server) can transmit a data packet having a larger volume of data. A specific process of the maximum transmission unit detection is not limited in this embodiment of this application.

In some embodiments, when transmitting data to the front-end server, the client compresses a header field of the to-be-transmitted data by using QPACK. The front-end server may parse, based on QPACK, the header field of the data transmitted by the client. The back-end server does not participate in the parsing process. QPACK represents coding of an HTTP/3 header field. In a scenario in which the client concurrently transmits a plurality of data requests, it is difficult to synchronize QPACK dynamic tables of a plurality of back-end servers. Therefore, when transmitting data to the client, the back-end servers disable the QPACK dynamic tables, and use only static tables to compress header fields of the to-be-transmitted data.

In some embodiments, QUIC is a UDP-based low-latency Internet transport layer protocol, UDP data needs to be assembled at an application layer, and application layer data is transmitted through a sendmsg interface. The sendmsg interface is an interface configured for transmitting the application layer data. When the back-end server restores a context based on the data request and the initial signaling, the back-end server obtains a virtual IP address from the initial signaling, sets an IP address of the back-end server to the virtual IP address, and transmits a data packet by using a socket created by the back-end server as a socket required by the sendmsg interface, so that the current existing packet transmission interface of the back-end server can be reused. The sendmsg interface in this embodiment is merely an example. During actual application, another interface configured for transmitting application layer data may be used.

In some embodiments, the data request processing method may be applied to a scenario in which to-be-played data is obtained during a video on demand. The video on demand is not a video played in real time. For example, a watched movie video is a video on demand.

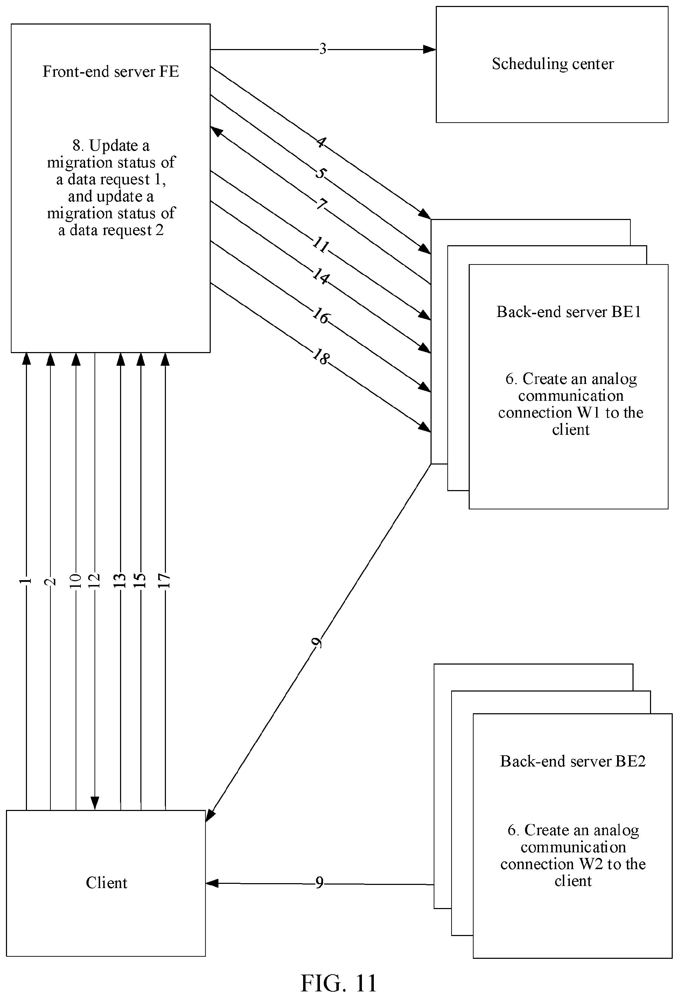

An example that a client concurrently transmits two data requests is used for description. The data request processing method is cooperatively performed by the client, a front-end server FE, a scheduling center, a back-end server BE1, and a back-end server BE2. As shown in FIG. 11 (interaction between the front-end server and the back-end server BE2 is not shown in FIG. 11), the data request processing method includes the following operations:
1. Create a first communication link between the front-end server FE and the client.
2. The client transmits a data request 1 and a data request 2 to the front-end server FE based on the first communication link.
3. The front-end server FE receives the data request 1 and the data request 2, transmits the data request 1 and the data request 2 to the scheduling center based on a communication connection to the scheduling center, and receives a back-end server address IP1 corresponding to the data request 1 and a back-end server address IP2 corresponding to the data request 2 that are returned by the scheduling center.
4. The front-end server FE creates a second communication link Q21 to the back-end server BE1 based on the back-end server address IP1, and creates a second communication link Q22 to the back-end server BE2 based on the back-end server address IP2.
5. The front-end server FE migrates the data request 1 and initial signaling x1 to the back-end server BE1 based on the second communication link Q21, and migrates the data request 2 and initial signaling x2 to the back-end server BE2 based on the second communication link Q22.
6. The back-end server BE1 creates an analog communication connection W1 to the client based on the data request 1 and the initial signaling x1. The back-end server BE2 creates an analog communication connection W2 to the client based on the data request 2 and the initial signaling x2.
7. After the transmission of the data request 1 is completed, the back-end server BE1 initiates a first unidirectional data channel s11 of the second communication link Q21, and transmits a transmission complete instruction to the front-end server FE through the first unidirectional data channel s11. After the transmission of the data request 2 is completed, the back-end server BE2 initiates a first unidirectional data channel s12 of the second communication link Q22, and transmits a transmission complete instruction to the front-end server FE through the first unidirectional data channel s12.
8. The front-end server FE updates a transmission module of the data request 1 based on the transmission complete instruction transmitted by the back-end server BE1, and updates a transmission module of the data request 2 based on the transmission complete instruction transmitted by the back-end server BE2.
9. The back-end server BE1 obtains target data d1 corresponding to the data request 1, determines, based on the target data d1 and a first packet number range r1, an initial CID cid1, and an initial session key key1 that are included in the initial signaling x1, a first data packet y1 corresponding to the target data d1, and transmits the first data packet y1 to the client based on the analog communication connection W1.
   The back-end server BE2 obtains target data d2 corresponding to the data request 2, determines, based on the target data d2 and a first packet number range r2, the initial CID cid1, and the initial session key key1 that are included in the initial signaling x2, a first data packet y2 corresponding to the target data d2, and transmits the first data packet y2 to the client based on the analog communication connection W2.
10. After obtaining the first data packets y1 and y2, the client transmits a first acknowledgment frame to the front-end server FE based on the first communication link.
11. The front-end server FE receives the first acknowledgment frame, initiates a second unidirectional data channel s21 of the second communication link Q21, initiates a second unidirectional data channel s22 of the second communication link Q21, transmits the first acknowledgment frame and a second packet number range r3 to the back-end server BE1 based on the second unidirectional data channel s21, and transmits the first acknowledgment frame and a second packet number range r4 to the back-end server BE2 based on the second unidirectional data channel s22. The back-end server BE1 transmits a second data packet y3 to the client based on the second packet number range r3. The back-end server BE2 transmits a second data packet y4 to the client based on the second packet number range r4.
12. When receiving a third acknowledgment frame transmitted by the client based on reception of the second data packets, the front-end server FE transmits a fourth acknowledgment frame used for responding to the first acknowledgment frame.
13. The client transmits an update CID frame to the front-end server FE through the first communication link, and the front-end server FE obtains a target CID cid2.
14. The front-end server FE transmits the target CID cid2 to the back-end server BE1 based on the second unidirectional data channel s21, and transmits the target CID cid2 to the back-end server BE2 based on the second unidirectional data channel s22. The back-end server BE1 and the back-end server BE2 update the initial CID cid1 to the target CID cid2.
15. The client transmits updated flow control information to the front-end server FE through the first communication link, and the front-end server FE determines, based on the updated flow control information, updated flow control information respectively corresponding to the back-end server BE1 and the back-end server BE1.
16. The front-end server FE transmits corresponding updated flow control information to the back-end server BE1 based on the second unidirectional data channel s21, and transmits corresponding updated flow control information to the back-end server BE2 based on the second unidirectional data channel s22.
17. The client transmits an update session key identifier key_phase2 to the front-end server FE through the first communication link.
18. The front-end server determines a target session key key2 based on key_phase2, transmits the update session key identifier key_phase2 to the back-end server BE1 based on the second unidirectional data channel s21, and transmits the update session key identifier key_phase2 to the back-end server BE2 based on the second unidirectional data channel s22. The back-end server BE1 and the back-end server BE2 determine the target session key key2 based on key_phase2.

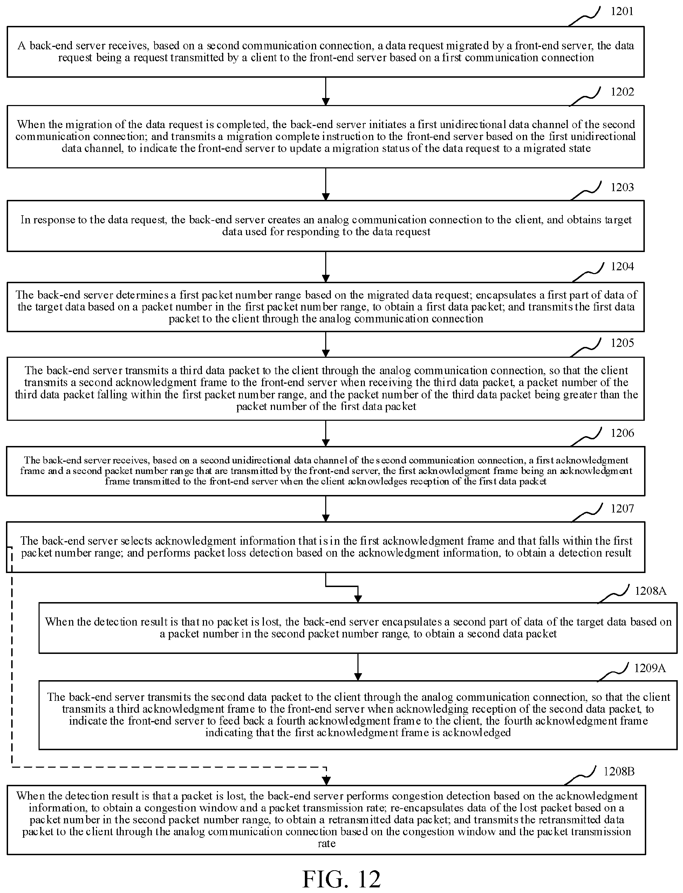

In some embodiments, as shown in FIG. 12, a data request processing method includes the following operations:
S1201. A back-end server receives, based on a second communication link, a data request migrated by a front-end server, the data request being a request transmitted by a client to the front-end server based on a first communication link.
S1202. When the transmission of the data request is completed, the back-end server initiates a first unidirectional data channel of the second communication link; and transmits a transmission complete instruction to the front-end server based on the first unidirectional data channel, to instruct the front-end server to update a transmission module of the data request to a migrated state.
S1203. In response to the data request, the back-end server creates an analog communication connection to the client, and obtains target data used for responding to the data request.
S1204. The back-end server determines a first packet number range based on the migrated data request; encapsulates a first part of data of the target data based on a packet number in the first packet number range, to obtain a first data packet; and transmits the first data packet to the client through the analog communication connection.
S1205. The back-end server transmits a third data packet to the client through the analog communication connection, so that the client transmits a second acknowledgment frame to the front-end server when receiving the third data packet, a packet number of the third data packet falling within the first packet number range, and the packet number of the third data packet being greater than the packet number of the first data packet.
S1206. The back-end server receives, based on a second unidirectional data channel of the second communication link, a first acknowledgment frame and a second packet number range that are transmitted by the front-end server, the first acknowledgment frame being an acknowledgment frame transmitted to the front-end server when the client acknowledges reception of the first data packet.
S1207. The back-end server selects acknowledgment information that is in the first acknowledgment frame and that falls within the first packet number range; and performs packet loss detection based on the acknowledgment information, to obtain a detection result.
S1208A. When the detection result is that no packet is lost, the back-end server encapsulates a second part of data of the target data based on a packet number in the second packet number range, to obtain a second data packet.
S1209A. The back-end server transmits the second data packet to the client through the analog communication connection, so that the client transmits a third acknowledgment frame to the front-end server when acknowledging reception of the second data packet, to instruct the front-end server to feed back a fourth acknowledgment frame to the client, the fourth acknowledgment frame indicating that the first acknowledgment frame is acknowledged.
S1208B. When the detection result is that a packet is lost, the back-end server performs congestion detection based on the acknowledgment information, to obtain a congestion window and a packet transmission rate; re-encapsulates data of the lost packet based on a packet number in the second packet number range, to obtain a retransmitted data packet; and transmits the retransmitted data packet to the client through the analog communication connection based on the congestion window and the packet transmission rate.

In the foregoing embodiment, the front-end server receives, through the first communication link to the client, the data request transmitted by the client, and obtains the address of the to-be-scheduled back-end server based on the data request, to establish the second communication link to the back-end server. The front-end server migrates the data request to the back-end server through the second communication link, so that the back-end server creates the analog communication connection to the client. The back-end server directly transmits the data packet used for responding to the data request to the client based on the analog communication connection. The front-end server performs request-level scheduling, and determines that the to-be-scheduled back-end server has the data for responding to the data request, so that the back-end server can directly respond to the data request without obtaining, from a source, the data for responding to the data request, which reduces a delay and communication overheads between servers. The back-end server directly transmits the data packet to the client through the analog communication connection, instead of the back-end server transmitting the data packet to the front-end server and then the front-end server transmitting the data packet to the client, which reduces bandwidth consumption between the back-end server and the front-end server, reduces downlink traffic pressure of the front-end server, increases an uplink throughput of the front-end server, reduces a delay, and improves transmission performance.

Although the operations in the flowcharts involved in the foregoing embodiments are sequentially displayed based on indication of arrows, the operations are not necessarily performed sequentially according to a sequence indicated by the arrows. Unless otherwise explicitly specified in this application, a sequence of performing the operations is not strictly limited, and the operations may be performed in other sequences. In addition, at least a part of operations in the flowcharts involved in the foregoing embodiments may include a plurality of operations or a plurality of phases, and the operations or phases are not necessarily performed at the same moment, but may be performed at different moments. Moreover, the operations or phases are not necessarily performed sequentially, but may be performed in turns or alternately with other operations or at least a part of operations or phases in the other operations.

Based on the same inventive concept, embodiments of this application further provide a data request processing apparatus for implementing the foregoing data request processing method. Implementation solutions provided by the apparatus for resolving problems are similar to the implementation solutions described in the foregoing method. Therefore, for specific definitions in one or more data request processing apparatus embodiments provided below, refer to definitions about the data request processing method in the foregoing descriptions. Details are not described herein again.

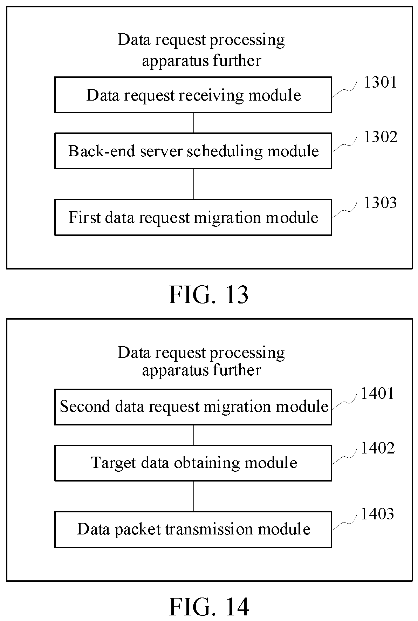

In one embodiment, as shown in FIG. 13, a data request processing apparatus is provided, including: a data request receiving module 1301, a back-end server scheduling module 1302, and a first data request transmission module 1303.

The data request receiving module 1301 is configured for receiving, through a first communication link, a data request transmitted by a client; the first communication link is a communication connection between the front-end server and the client; a back-end server stores therein data for responding to the data request.

The back-end server scheduling module 1302 is configured for obtaining an address of the back-end server based on the data request, and creating a second communication link based on the address, the second communication link being a communication connection between the front-end server and the back-end server.

The first data request transmission module 1303 is configured for transmitting the data request to the back-end server via the second communication link, to instruct the back-end server to create an analog communication connection between the back-end server and the client, and transmit a data packet used for responding to the data request to the client using the analog communication connection.

In some embodiments, the data request processing apparatus further includes: a transmission module update module, configured for: when the transmission of the data request is completed, receiving, based on a first unidirectional data channel of the second communication link, a transmission complete instruction transmitted by the back-end server; and updating a transmission module of the data request to a migrated state based on the transmission complete instruction.

In some embodiments, the data packet includes a first data packet and a second data packet. The data request processing apparatus further includes: a packet number range transmission module, configured for receiving, based on the first communication link, a first acknowledgment frame transmitted by the client, the first acknowledgment frame being an acknowledgment frame transmitted when the client acknowledges reception of the first data packet, and a packet number of the first data packet falling within a first packet number range; and transmitting the first acknowledgment frame and a second packet number range to the back-end server based on the second communication link, to instruct the back-end server to transmit the second data packet to the client based on the analog communication connection when determining, based on the first acknowledgment frame, that no packet is lost, a packet number of the second data packet falling within the second packet number range, and a packet number in the second packet number range being greater than a packet number in the first packet number range.

In some embodiments, the data packet includes a first data packet and a second data packet. The data request processing apparatus further includes: a delayed acknowledgment module, configured for: after the first acknowledgment frame transmitted by the client is received based on the first communication link, receiving, based on the first communication link, a second acknowledgment frame transmitted by the client, the second acknowledgment frame being an acknowledgment frame transmitted when the client acknowledges reception of the third data packet, a packet number of the third data packet falling within the first packet number range, and the packet number of the third data packet being greater than the packet number of the first data packet; and
after the first acknowledgment frame and the second packet number range are transmitted to the back-end server based on the second communication link, receiving, based on the first communication link, a third acknowledgment frame transmitted by the client, the third acknowledgment frame being an acknowledgment frame transmitted when the client acknowledges reception of the second data packet, and a packet number in the second packet number range being greater than a packet number in the first packet number range; and feeding back a fourth acknowledgment frame to the client based on the first communication link, to instruct the client to determine that the first acknowledgment frame is acknowledged.

In some embodiments, the data request processing apparatus is further configured for establishing a second unidirectional data channel of the second communication link. The packet number range transmission module is specifically configured for: determining, based on the first acknowledgment frame and the first packet number range, whether a packet number allocation condition is met; and when the packet number allocation condition is met, transmitting the first acknowledgment frame and the second packet number range to the back-end server based on the second unidirectional data channel.

In some embodiments, the data packet further includes a fourth data packet.

The packet number range transmission module is further configured for: receiving, based on the first unidirectional data channel of the second communication link, a packet number obtaining request transmitted by the back-end server; and transmitting a third packet number range to the back-end server in response to the packet number obtaining request, to instruct the back-end server to transmit the fourth data packet based on the third packet number range, a packet number included in the third packet number range being greater than the packet number included in the first packet number range.

In some embodiments, the data request carries initial signaling, and the initial signaling includes client information and flow control information. The first data request transmission module 1303 is specifically configured for transmitting the data request to the back-end server based on the second communication link, to instruct the back-end server to create the analog communication connection to the client based on the client information and transmit the data packet used for responding to the data request to the client through the analog communication connection within a limit of the flow control information.

In some embodiments, the flow control information includes a channel window value and a connection window value. The data request processing apparatus further includes: a flow control information update module, configured for: receiving, based on the first communication link, a target channel offset transmitted by the client; updating the channel window value based on the target channel offset, to obtain an updated channel window value; and transmitting the updated channel window value to the back-end server based on the second unidirectional data channel of the second communication link. Correspondingly, the transmitting the data packet used for responding to the data request to the client through the analog communication connection within a limit of the flow control information includes: transmitting the data packet used for responding to the data request to the client through the analog communication connection within limits of the updated channel window value and the connection window value.

In some embodiments, the flow control information update module is further configured for: receiving, based on the first communication link, a target connection offset transmitted by the client; updating the connection window value based on the target connection offset, to obtain an updated connection window value; and transmitting the updated connection window value to the back-end server based on the second unidirectional data channel of the second communication link. The transmitting the data packet used for responding to the data request to the client through the analog communication connection within a limit of the flow control information includes: transmitting the data packet used for responding to the data request to the client through the analog communication connection within limits of the updated connection window value and the channel window value.

In some embodiments, the initial signaling further includes an initial CID, and the data request processing apparatus further includes: a CID update module, configured for: receiving, based on the first communication link, an update CID frame transmitted by the client; obtaining a target CID based on the update CID frame; transmitting the target CID to the back-end server based on the second unidirectional data channel of the second communication link, to instruct the back-end server to transmit, to the client through the analog communication connection, a data packet carrying the target CID; and transmitting a retire CID frame to the client based on the first communication link, the retire CID frame indicating the client to mark the initial CID in a retired state, mark the target CID in a used state, and receive the data packet carrying the target CID.

In some embodiments, the data request processing apparatus further includes: a session key update module, configured for: receiving, based on the first communication link, an update session key identifier transmitted by the client; determining a target session key based on the update session key identifier, the target session key being obtained by updating an initial session key included in the initial signaling; and transmitting the update session key identifier to the back-end server based on the second unidirectional data channel of the second communication link, to instruct the back-end server to determine the target session key based on the update session key identifier, and encrypt, based on the target session key, the data packet used for responding to the data request.

In some embodiments, the session key update module is further configured for: receiving, based on the first communication link, a fifth acknowledgment frame transmitted by the client, the fifth acknowledgment frame being transmitted when the client receives a data packet encrypted based on the target session key; and feeding back a sixth acknowledgment frame to the client based on the first communication link, to instruct the client to determine that the initial session key is updated to the target session key.

In one embodiment, as shown in FIG. 14, a data request processing apparatus is provided, including: a second data request transmission module 1401, a target data obtaining module 1402, and a data packet transmission module 1403.

The second data request transmission module 1401 is configured for receiving, based on a second communication link, a data request transmitted by a front-end server, the data request being a request transmitted by a client to the front-end server based on a first communication link.

The target data obtaining module 1402 is configured for: in response to the data request, creating an analog communication connection between the back-end server and the client, and obtaining target data used for responding to the data request.

The data packet transmission module 1403 is configured for transmitting, to the client using the analog communication connection, a data packet in which the target data is encapsulated.

In some embodiments, the data request processing apparatus further includes:
a transmission complete instruction transmission module, configured for: when the transmission of the data request is completed, creating a first unidirectional data channel of the second communication link; and transmitting a transmission complete instruction to the front-end server based on the first unidirectional data channel, to instruct the front-end server to update a transmission module of the data request to a migrated state.

In some embodiments, the data packet includes a first data packet, and the data packet transmission module 1403 is specifically configured for: determining a first packet number range based on the migrated data request; encapsulating a first part of data of the target data based on a packet number in the first packet number range, to obtain the first data packet; and transmitting the first data packet to the client through the analog communication connection.

In some embodiments, the data packet further includes a second data packet and a third data packet. The data packet transmission module 1403 is further configured for: transmitting the third data packet to the client through the analog communication connection, so that the client transmits a second acknowledgment frame to the front-end server when receiving the third data packet, a packet number of the third data packet falling within the first packet number range, and the packet number of the third data packet being greater than the packet number of the first data packet; receiving, based on a second unidirectional data channel of the second communication link, a first acknowledgment frame and a second packet number range that are transmitted by the front-end server, the first acknowledgment frame being an acknowledgment frame transmitted to the front-end server when the client acknowledges reception of the first data packet; performing packet loss detection based on the first acknowledgment frame, to obtain a detection result; when the detection result is that no packet is lost, encapsulating a second part of data of the target data based on a packet number in the second packet number range, to obtain the second data packet; and transmitting the second data packet to the client through the analog communication connection, so that the client transmits a third acknowledgment frame to the front-end server when acknowledging reception of the second data packet, to instruct the front-end server to feed back a fourth acknowledgment frame to the client, the fourth acknowledgment frame indicating that the first acknowledgment frame is acknowledged.

In some embodiments, the data packet transmission module 1403 is further configured for: selecting acknowledgment information that is in the first acknowledgment frame and that falls within the first packet number range; performing packet loss detection based on the acknowledgment information, to obtain a detection result; when the detection result is that a packet is lost, performing congestion detection based on the acknowledgment information, to obtain a congestion window and a packet transmission rate; re-encapsulating data of the lost packet based on a packet number in the second packet number range, to obtain a retransmitted data packet; and transmitting the retransmitted data packet to the client through the analog communication connection based on the congestion window and the packet transmission rate.

All of a part of the modules in the data request processing apparatus may be implemented by software, hardware, and a combination thereof. The modules may be built in or independent of a processor of a computer device in a form of hardware, or may be stored in a memory of the computer device in a form of software for invocation by the processor to execute operations corresponding to the modules.

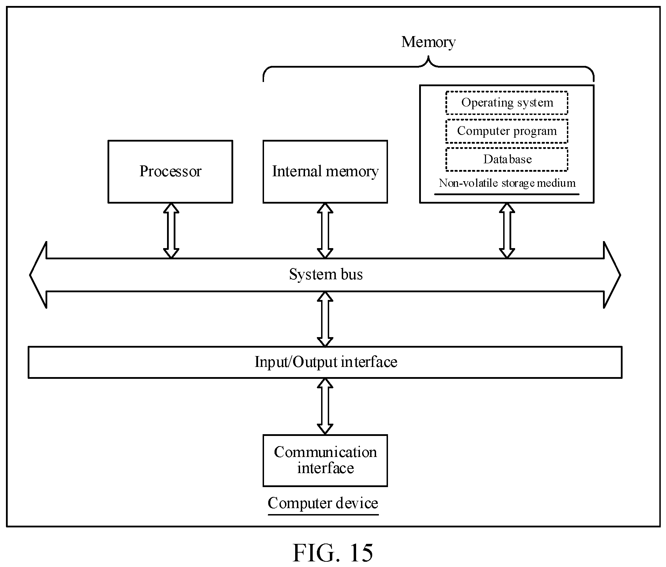

In one embodiment, a computer device is provided. The computer device may be a front-end server or a back-end server, whose internal structure may be shown in FIG. 15. The computer device includes a processor, a memory, an input/output (I/O) interface, and a communication interface. The processor, the memory, and the I/O interface are connected via a system bus, and the communication interface is connected to the system bus via the I/O interface. The processor of the computer device is configured for providing computing and control capabilities. The memory of the computer device includes a non-volatile storage medium and an internal memory. The non-volatile storage medium stores an operating system, a computer program, and a database. The internal memory provides an environment for operating the operating system and the computer program in the non-volatile storage medium. The database of the computer device is configured for storing data for responding to a data request. The I/O interface of the computer device is configured for exchanging information between the processor and an external device. The communication interface of the computer device is configured for connecting and communicating with an external terminal through a network. The computer program is executed by the processor to implement a data request processing method.

A person skilled in the art may understand that the structure shown in FIG. 15 is merely a block diagram of a partial structure related to a solution in this application, and does not constitute a limitation on a computer device to which the solution in this application is applied. Specifically, the computer device may include more or fewer components than those shown in the figure, or some components may be combined, or a different component layout may be used.

In one embodiment, a computer device is provided, including a memory and a processor. The memory stores a computer program, and the processor, when executing the computer program, implements the following operations:
receiving, through a first communication link, a data request transmitted by a client; determining a to-be-scheduled back-end server based on the data request, and creating a second communication link, the second communication link being a communication connection to the back-end server; and migrating the data request to the back-end server based on the second communication link, to instruct the back-end server to create an analog communication connection to the client and transmit a data packet corresponding to the data request to the client based on the analog communication connection; or
receiving, based on a second communication link, a data request migrated by a front-end server, the data request being a request transmitted by a client to the front-end server based on a first communication link; in response to the data request, creating an analog communication connection to the client, and obtaining target data corresponding to the data request; and transmitting, to the client through the analog communication connection, a data packet in which the target data is encapsulated.

In one embodiment, a computer-readable storage medium is provided, having a computer program stored therein. The computer program, when executed by a processor, implements the following operations:
receiving, through a first communication link, a data request transmitted by a client; determining a to-be-scheduled back-end server based on the data request, and creating a second communication link, the second communication link being a communication connection to the back-end server; and migrating the data request to the back-end server based on the second communication link, to instruct the back-end server to create an analog communication connection to the client and transmit a data packet corresponding to the data request to the client based on the analog communication connection; or
receiving, based on a second communication link, a data request migrated by a front-end server, the data request being a request transmitted by a client to the front-end server based on a first communication link; in response to the data request, creating an analog communication connection to the client, and obtaining target data corresponding to the data request; and transmitting, to the client through the analog communication connection, a data packet in which the target data is encapsulated.

In one embodiment, a computer program product is provided, including a computer program. The computer program, when executed by a processor, implements the following operations:
receiving, through a first communication link, a data request transmitted by a client; determining a to-be-scheduled back-end server based on the data request, and creating a second communication link, the second communication link being a communication connection to the back-end server; and migrating the data request to the back-end server based on the second communication link, to instruct the back-end server to create an analog communication connection to the client and transmit a data packet corresponding to the data request to the client based on the analog communication connection; or
receiving, based on a second communication link, a data request migrated by a front-end server, the data request being a request transmitted by a client to the front-end server based on a first communication link; in response to the data request, creating an analog communication connection to the client, and obtaining target data corresponding to the data request; and transmitting, to the client through the analog communication connection, a data packet in which the target data is encapsulated.

User information (including, but not limited to, user device information, user personal information, and the like) and data (including, but not limited to, data used for analysis, stored data, displayed data, and the like) involved in this application are all information and data authorized by users or fully authorized by parties, and acquisition, use, and processing of relevant data need to comply with relevant laws, regulations, and standards of relevant countries and regions.

A person of ordinary skill in the art may understand that all or a part of procedures of the method in the foregoing embodiments may be implemented by a computer program instructing relevant hardware. The computer program may be stored in a non-volatile computer-readable storage medium. When the computer program is executed, the procedures of the foregoing method embodiments may be implemented. Any reference to a memory, a database, or another medium used in the embodiments provided in this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, or the like. The volatile memory may be a random access memory (RAM), an external cache, or the like. By way of illustration rather than limitation, the RAM is available in various forms, such as a static random access memory (SRAM) or a dynamic random access memory (DRAM). The database involved in the embodiments provided in this application may include at least one of a relational database and a non-relational database. The non-relational database may include, but is not limited to, a blockchain-based distributed database or the like. The processor involved in the embodiments provided in this application may be, but is not limited to, a general-purpose processor, a central processing unit, a graphics processing unit, a digital signal processor, a programmable logic device, a quantum computing-based data processing logic device, or the like.

Technical features of the foregoing embodiments may be combined in different manners to form other embodiments. For concise description, not all possible combinations of the technical features in the foregoing embodiments are described. However, provided that no conflict exists, the combinations of these technical features shall be considered as falling within the scope recorded in this specification.

The foregoing embodiments show only several implementations of this application and are described in detail, which, however, are not to be construed as a limitation to the patent scope of this application. For a person of ordinary skill in the art, several transformations and improvements can be made without departing from the idea of this application. These transformations and improvements fall within the protection scope of this application. Therefore, the protection scope of this application shall be subject to the appended claims.

## Claims

1. A method of processing a data request, performed by a front-end server, the method comprising:
receiving, through a first communication link, a data request transmitted by a client, the first communication link being a communication connection between the front-end server and the client; a back-end server storing therein data for responding to the data request;
obtaining an address of the back-end server based on the data request, and creating a second communication link based on the address, the second communication link being a communication connection between the front-end server and the back-end server; and
transmitting the data request to the back-end server via the second communication link, to instruct the back-end server to create an analog communication connection between the back-end server and the client, and transmit a data packet for responding to the data request to the client using the analog communication connection.

2. The method according to claim 1, wherein the method further comprises:
when the transmission of the data request is completed, receiving, based on a first unidirectional data channel of the second communication link, a transmission complete instruction transmitted by the back-end server; and
updating a transmission status of the data request to a transmitted state based on the transmission complete instruction.

3. The method according to claim 1 or 2, wherein the data packet comprises a first data packet and a second data packet; and the method further comprises:
receiving, based on the first communication link, a first acknowledgment frame transmitted by the client, the first acknowledgment frame being an acknowledgment frame transmitted when the client acknowledges reception of the first data packet, and a packet number of the first data packet falling within a first packet number range; and
transmitting the first acknowledgment frame and a second packet number range to the back-end server based on the second communication link, to instruct the back-end server to transmit the second data packet to the client based on the analog communication connection when determining, based on the first acknowledgment frame, that no packet is lost, a packet number of the second data packet falling within the second packet number range, and a packet number in the second packet number range being greater than a packet number in the first packet number range.

4. The method according to claim 3, wherein the data packet further comprises a third data packet; and after the receiving, based on the first communication link, a first acknowledgment frame transmitted by the client, the method further comprises:
receiving, based on the first communication link, a second acknowledgment frame transmitted by the client, the second acknowledgment frame being an acknowledgment frame transmitted when the client acknowledges reception of the third data packet, a packet number of the third data packet falling within the first packet number range, and the packet number of the third data packet being greater than the packet number of the first data packet; and
after the transmitting the first acknowledgment frame and a second packet number range to the back-end server based on the second communication link, the method further comprises:
receiving, based on the first communication link, a third acknowledgment frame transmitted by the client, the third acknowledgment frame being an acknowledgment frame transmitted when the client acknowledges reception of the second data packet; and
feeding back a fourth acknowledgment frame to the client based on the first communication link, to instruct the client to determine that the first acknowledgment frame is acknowledged.

5. The method according to claim 3 or 4, wherein the method further comprises:
establishing a second unidirectional data channel of the second communication link; and
the transmitting the first acknowledgment frame and a second packet number range to the back-end server based on the second communication link comprises:
determining, based on the first acknowledgment frame and the first packet number range, whether a packet number allocation condition is met; and
when the packet number allocation condition is met, transmitting the first acknowledgment frame and the second packet number range to the back-end server based on the second unidirectional data channel.

6. The method according to claim 5, wherein the data packet further comprises a fourth data packet; and the method further comprises:
receiving, based on the first unidirectional data channel of the second communication link, a packet number obtaining request transmitted by the back-end server; and
transmitting a third packet number range to the back-end server in response to the packet number obtaining request, to instruct the back-end server to transmit the fourth data packet based on the third packet number range, a packet number comprised in the third packet number range being greater than the packet number comprised in the first packet number range.

7. The method according to any one of claims 1 to 6, wherein the data request carries initial signaling, and the initial signaling comprises client information and flow control information; and
the transmitting the data request to the back-end server via the second communication link, to instruct the back-end server to create an analog communication connection between the back-end server and the client, and transmit a data packet for responding to the data request to the client using the analog communication connection comprises:
transmitting the data request to the back-end server based on the second communication link, to instruct the back-end server to create the analog communication connection between the back-end server and the client, and transmit the data packet used for responding to the data request to the client using the analog communication connection within a limit of the flow control information.

8. The method according to claim 7, wherein the flow control information comprises a channel window value and a connection window value; and the method further comprises:
receiving, based on the first communication link, a target channel offset transmitted by the client;
updating the channel window value based on the target channel offset, to obtain an updated channel window value; and
transmitting the updated channel window value to the back-end server based on the second unidirectional data channel of the second communication link; and
the transmitting the data packet used for responding to the data request to the client using the analog communication connection within a limit of the flow control information comprises:
transmitting the data packet used for responding to the data request to the client using the analog communication connection within limits of the updated channel window value and the connection window value.

9. The method according to claim 7, wherein the flow control information comprises a channel window value and a connection window value; and the method further comprises:
receiving, based on the first communication link, a target connection offset transmitted by the client;
updating the connection window value based on the target connection offset, to obtain an updated connection window value; and
transmitting the updated connection window value to the back-end server based on the second unidirectional data channel of the second communication link; and
the transmitting the data packet used for responding to the data request to the client using the analog communication connection within a limit of the flow control information comprises:
transmitting the data packet used for responding to the data request to the client through the analog communication connection within limits of the updated connection window value and the channel window value.

10. The method according to any one of claims 7 to 9, wherein the initial signaling further comprises an initial connection identifier; and the method further comprises:
receiving, based on the first communication link, an update connection identifier frame transmitted by the client;
obtaining a target connection identifier based on the update connection identifier frame;
transmitting the target connection identifier to the back-end server based on the second unidirectional data channel of the second communication link, to instruct the back-end server to transmit, to the client through the analog communication connection, a data packet carrying the target connection identifier; and
transmitting a retire connection identifier frame to the client based on the first communication link, the retire connection identifier frame indicating the client to mark the initial connection identifier in a retired state, mark the target connection identifier in a used state, and receive the data packet carrying the target connection identifier.

11. The method according to any one of claims 7 to 9, wherein the method further comprises:
receiving, based on the first communication link, an update session key identifier transmitted by the client;
determining a target session key based on the update session key identifier, the target session key being obtained by updating an initial session key comprised in the initial signaling; and
transmitting the update session key identifier to the back-end server based on the second unidirectional data channel of the second communication link, to instruct the back-end server to determine the target session key based on the update session key identifier, and encrypt, based on the target session key, the data packet used for responding to the data request.

12. The method according to claim 11, wherein the method further comprises:
receiving, based on the first communication link, a fifth acknowledgment frame transmitted by the client, the fifth acknowledgment frame being transmitted when the client receives a data packet encrypted based on the target session key; and
feeding back a sixth acknowledgment frame to the client based on the first communication link, to instruct the client to determine that the initial session key is updated to the target session key.

13. A method of processing a data request, performed by a back-end server, the method comprising:
receiving, based on a second communication link, a data request transmitted by a front-end server, the data request being a request transmitted by a client to the front-end server based on a first communication link;
in response to the data request, creating an analog communication connection between the back-end server and the client, and obtaining target data used for responding to the data request; and
transmitting, to the client through the analog communication connection, a data packet in which the target data is encapsulated.

14. The method according to claim 13, wherein after the receiving, based on a second communication link, a data request transmitted by a front-end server, the method further comprises:
when the transmission of the data request is completed, creating a first unidirectional data channel of the second communication link; and
transmitting a transmission complete instruction to the front-end server based on the first unidirectional data channel, to instruct the front-end server to update a transmission status of the data request to a transmitted state.

15. The method according to claim 13 or 14, wherein the data packet comprises a first data packet; and the transmitting, to the client through the analog communication connection, a data packet in which the target data is encapsulated comprises:
determining a first packet number range based on the transmitted data request;
encapsulating a first part of data of the target data based on a packet number in the first packet number range, to obtain the first data packet; and
transmitting the first data packet to the client through the analog communication connection.

16. The method according to claim 15, wherein the data packet further comprises a second data packet and a third data packet; and
after the transmitting the first data packet to the client through the analog communication connection, the method further comprises:
transmitting the third data packet to the client through the analog communication connection, so that the client transmits a second acknowledgment frame to the front-end server when receiving the third data packet, a packet number of the third data packet falling within the first packet number range, and the packet number of the third data packet being greater than the packet number of the first data packet;
receiving, based on a second unidirectional data channel of the second communication link, a first acknowledgment frame and a second packet number range that are transmitted by the front-end server, the first acknowledgment frame being an acknowledgment frame transmitted to the front-end server when the client acknowledges reception of the first data packet;
performing packet loss detection based on the first acknowledgment frame, to obtain a detection result;
when the detection result is that no packet is lost, encapsulating a second part of data of the target data based on a packet number in the second packet number range, to obtain the second data packet; and
transmitting the second data packet to the client through the analog communication connection, so that the client transmits a third acknowledgment frame to the front-end server when acknowledging reception of the second data packet, to instruct the front-end server to feed back a fourth acknowledgment frame to the client, the fourth acknowledgment frame indicating that the first acknowledgment frame is acknowledged.

17. The method according to claim 16, wherein the performing packet loss detection based on the first acknowledgment frame, to obtain a detection result comprises:
selecting acknowledgment information that is in the first acknowledgment frame and that falls within the first packet number range; and
performing packet loss detection based on the acknowledgment information, to obtain a detection result; and
the data packet further comprises a retransmitted data packet; and the method further comprises:
when the detection result is that a packet is lost, performing congestion detection based on the acknowledgment information, to obtain a congestion window and a packet transmission rate;
re-encapsulating data of the lost packet based on a packet number in the second packet number range, to obtain the retransmitted data packet; and
transmitting the retransmitted data packet to the client through the analog communication connection based on the congestion window and the packet transmission rate.

18. An apparatus of processing a data request, comprising:
a data request receiving module, configured for receiving, through a first communication link, a data request transmitted by a client; the first communication link being a communication connection between the front-end server and the client; a back-end server storing therein data for responding to the data request;
a back-end server scheduling module, configured for obtaining an address of the back-end server based on the data request, and creating a second communication link based on the address, the second communication link being a communication connection between the front-end server and the back-end server; and
a first data request transmission module, configured for transmitting the data request to the back-end server via the second communication link, to instruct the back-end server to create an analog communication connection between the back-end server and the client, and transmit a data packet used for responding to the data request to the client using the analog communication connection.

19. An apparatus of processing a data request, comprising:
a second data request transmission module, configured for receiving, based on a second communication link, a data request transmitted by a front-end server, the data request being a request transmitted by a client to the front-end server based on a first communication link;
a target data obtaining module, configured for: in response to the data request, creating an analog communication connection between the back-end server and the client, and obtaining target data used for responding to the data request; and
a data packet transmission module, configured for transmitting, to the client using the analog communication connection, a data packet in which the target data is encapsulated.

20. A computer device, comprising a memory and one or more processors, the memory having a computer-readable instruction stored therein, and the computer readable instruction, when executed by the one or more processors, causing the one or more processors to perform operations of the method according to any one of claims 1 to 17.

21. One or more non-volatile readable storage media, having a computer-readable instruction stored therein, the computer-readable instruction, when executed by one or more processors, causing the one or more processors to perform operations of the method according to any one of claims 1 to 17.

22. A computer-readable instruction product, comprising a computer-readable instruction, the computer-readable instruction, when executed by a processor, implementing operations of the method according to any one of claims 1 to 17.
